(19) Europäisches Patentamt
European Patent Office
Office européen des brevets

(11) EP 1 128 051 B1

(12) EUROPEAN PATENT SPECIFICATION

(45) Date of publication and mention of the grant of the patent:
**30.06.2004 Bulletin 2004/27**

(51) Int Cl.[7]: **F02D 41/40**, F02D 41/02, F02D 41/14

(21) Application number: **01104315.5**

(22) Date of filing: **22.02.2001**

# (54) Exhaust-gas cleaning devices for an engine and a method of setting its fuel injection timing

Emissionsmindernde Abgasreinigungsanlage und Verfahren zur Einstellung des Kraftstoffeinspritzzeitpunktes

Dispositif d'épuration de gaz d'échappement et procédé de détermination de l'instant d'injection

(84) Designated Contracting States:
**DE ES FR GB IT**

(30) Priority: **23.02.2000 JP 2000045579**
**20.10.2000 JP 2000321699**
**20.11.2000 JP 2000352922**

(43) Date of publication of application:
**29.08.2001 Bulletin 2001/35**

(73) Proprietor: **MAZDA MOTOR CORPORATION**
**Aki-gun, Hiroshima-ken (JP)**

(72) Inventors:
- **Kataoka, Motoshi**
  **Aki-gun, Hiroshima-ken (JP)**
- **Watanabe, Tomomi**
  **Aki-gun, Hiroshima-ken (JP)**
- **Hayashibara, Hiroshi**
  **Aki-gun, Hiroshima-ken (JP)**
- **Saito, Tomoaki**
  **Aki-gun, Hiroshima-ken (JP)**
- **Kondou, Terunori**
  **Aki-gun, Hiroshima-ken (JP)**

(74) Representative: **Gossel, Hans K., Dipl.-Ing. et al**
**Lorenz-Seidler-Gossel**
**Widenmayerstrasse 23**
**80538 München (DE)**

(56) References cited:
**EP-A- 0 773 057**
**EP-A- 0 826 869**
**FR-A- 2 782 124**
**US-A- 5 479 775**
**US-A- 5 642 705**

- **CHMELA F G ET AL: "EMISSIONSVERBESSERUNG AN DIESEL-MOTOREN MIT DIREKTEINSPRITZUNG MITTELS EINSPRITZVERLAUFSFORMUNG" MTZ MOTORTECHNISCHE ZEITSCHRIFT, FRANCKH'SCHE VERLAGSHANDLUNG,ABTEILUNG TECHNIK. STUTTGART, DE, vol. 60, no. 9, September 1999 (1999-09), pages 552-558, XP000870853 ISSN: 0024-8525**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 128 051 B1

Printed by Jouve, 75001 PARIS (FR)

## Description

## BACKGROUND OF THE INVENTION

### Field of the Invention

This invention relates to exhaust-gas cleaning devices for an engine installed on a motor vehicle or the like in accordance with the preamble of claim 1 as well as to a method of setting fuel injection timing in accordance with the preamble of claim 14.

### Description of the Prior Art

Japanese Unexamined Patent Publication No. 9-317524 discloses a prior art example of a nitrogen oxide converter for an internal combustion engine. This nitrogen oxide converter comprises a catalytic converter including a first catalytic unit provided upstream in an exhaust passage and a second catalytic unit provided downstream of and in series with the first catalytic unit, and the engine has a first group of cylinders connected to the exhaust passage upstream of the first catalytic unit and a second group of cylinders connected to the exhaust passage between the first catalytic unit and the second catalytic unit, wherein a primary fuel injection command for producing engine power and a secondary fuel injection command for supplying hydrocarbons (HC) are transmitted to a fuel injector for each cylinder to regulate the amount of fuel supplied by secondary fuel injection in accordance with the temperatures of the first and second catalytic units determined by a catalyst temperature detector, and to thereby maximize the conversion rate of nitrogen oxides (NOx) while preventing the individual catalytic units from overheating.

Japanese Unexamined Patent Publication No. 8-261052 discloses another prior art example of a NOx converter for an internal combustion engine comprising fuel injectors provided for individual cylinders, a catalytic converter provided in an exhaust passage for reducing NOx and a fuel injection controller for activating the fuel injectors, wherein the fuel injection controller transmits primary fuel injection commands to the fuel injectors for injecting fuel in the vicinity of compression stroke top dead center for producing engine power as well as secondary fuel injection commands for injecting fuel during expansion or exhaust stroke for supplying HC to the catalytic converter in such a way that the number of the secondary fuel injection commands is smaller than the number of the primary fuel injection commands to thereby obtain a satisfactory NOx conversion rate.

It is possible to reduce NOx by causing it to react with reductants including HC in the aforementioned examples constructed to improve the NOx conversion rate while preventing overheating of the catalytic units (catalytic converter) by making the secondary fuel injection in addition to the primary fuel injection, which is made in accordance with engine operating conditions, to thereby increase the amount of HC in exhaust gas. However, the NOx converters of these prior art examples have a problem that they can not effectively reduce NOx or effectively prevent soot formed of an aggregate of carbon particles produced in combustion chambers of the engine from being released into the atmosphere when catalysts are still cold and inactive or when their temperature is higher than a specified value.

While the secondary fuel injection is made besides the primary fuel injection to accelerate warm-up of the NOx converters or to make a judgment on the degree of deterioration of their catalysts based on the rate of temperature increase of the NOx converters in the prior art examples, they have a problem that soot produced in combustion chambers of the engine flows into the exhaust passage and the quantity of soot released into the atmosphere increases if secondary fuel injection timing is improper.

An exhaust-gas cleaning device according to the preamble of claim 1 is known from document EP 0 826 869. This prior art reference discloses an exhaust-gas heating system for an internal combustion engine wherein a primary fuel injection and a secondary fuel injection is made. To increase the exhaust-gas temperature for activation of the NOx purification catalyst, the primary fuel injection is performed in a time period from an intake stroke and an expansion stroke and thereafter the secondary fuel injection is performed at a timing which is possibly the latest part of a time period during which a flame due to the primary fuel injection remains.

Furthermore, document FR 2 782 124 discloses a direct fuel injection engine with a turbocharger. In order to improve warm-up characteristic of the catalyst, a primary fuel injection is performed in a time period from the intake stroke to an expansion stroke and thereafter a secondary fuel injection is performed in such a manner that the timing of secondary fuel injection is adjusted such that a temperature in a cylinder reaches a certain level. The fuel injection regimes disclosed by these documents however may not satisfyingly enough purify the exhaust-gas by preventing raw NOx and soot discharged from the engine from being released into the atmosphere.

It is an objective of the present invention vis-à-vis this prior art to provide an improved exhaust-gas cleaning device and an improved method for setting fuel injection timing which make it possible to more effectively purify exhaust-gas.

This objective is achieved by an exhaust-gas cleaning device according to claim 1. Furthermore, this objective is achieved by a method according to claim 14. Preferred embodiments of the invention are laid down in the dependent claims.

According to the invention, the aforementioned exhaust-gas cleaning device comprises a turbocharger driven by exhaust gas for supplying the engine with precompressed intake air, wherein the secondary fuel injection time is corrected with reference to the ending time of diffusion combustion which varies due to a supercharging effect provided by the turbocharger.

In this construction, exhaust gas pressure increases as the secondary fuel injection is made at a specific time after the primary fuel injection, and because the amount of intake air increases due to the supercharging effect of the turbocharger, burning of carbon residue left within the combustion chamber is accelerated and generation of soot is effectively suppressed. Furthermore, when the ending time of diffusion combustion has been advanced as a result of the increase in the amount of intake air due to the supercharging effect of the turbocharger, the secondary fuel injection time is corrected such that the fuel supplied by the secondary injection would combust approximately at the ending time of diffusion combustion which tends to vary due to the supercharging effect of the turbocharger.

According to an embodiment of the invention, the exhaust-gas cleaning device for an engine comprises a fuel injector for injecting fuel into a combustion chamber, a combustion controller for controlling burning conditions of the fuel injected by the fuel injector, a catalytic NOx converter provided in an exhaust passage of the engine for converting at least NOx, a reductant adder for increasing the quantity of reductant in exhaust gas by causing the fuel injector to inject the fuel at a specified time during a period from an expansion stroke through an exhaust stroke, and an activation state detector for judging whether the catalytic NOx converter is in its activated state, wherein when the activation state detector judges that the catalytic NOx converter is in an inactivated state, fuel injection time controlled by the reductant adder is advanced compared to a case where the catalytic NOx converter is in the activated state.

Since the reductant adder performs a control operation for advancing the fuel injection time compared to the case where the catalytic NOx converter is in the activated state when the catalytic NOx converter is judged to be in its inactivated state in this construction, the amount of NOx discharged from the combustion chamber is reduced and, therefore, NOx emissions into the atmosphere are suppressed.

In one embodiment of the invention, the catalytic NOx converter includes a NOx-reducing catalyst which purifies the exhaust gas by reducing NOx contained therein as a result of reaction between NOx and the reductant occurring under oxygen-rich conditions in which the concentration of oxygen is high.

In this construction, the reductant adder performs the control operation for advancing the fuel injection time compared to the case where the catalytic NOx converter is in the activated state when the NOx-reducing catalyst which reduces NOx as a result of reaction between NOx and the reductant is judged to be in its inactivated state. Thus, the amount of NOx discharged from the combustion chamber is reduced and, in particular, NOx emissions into the atmosphere are suppressed.

According to another embodiment of the invention, the reductant adder includes a secondary injection controller which controls the fuel injector to make secondary injection of the fuel at a specific time during the period from the expansion stroke through the exhaust stroke after primary injection of the fuel from the fuel injector in accordance with operating conditions of the engine, wherein the secondary injection controller advances the secondary fuel injection time within a period from the point of the primary fuel injection to a crank angle of 60° after compression stroke top dead center when the activation state detector judges that the NOx-reducing catalyst is in the inactivated state.

In this construction, the reductant adder including the secondary injection controller advances the secondary fuel injection time within the period from the point of the primary fuel injection to the crank angle of 60° after compression stroke top dead center when the NOx-reducing catalyst is judged to be in the inactivated state. Accordingly, the amount of NOx discharged from the combustion chamber is effectively reduced and NOx emissions into the atmosphere are suppressed.

According to another embodiment of the invention, the secondary injection controller performs the secondary fuel injection at longer time intervals than the period of a single combustion cycle when the activation state detector judges that the NOx-reducing catalyst is in the inactivated state.

In this construction, the reductant adder including the secondary injection controller advances the secondary fuel injection time within the period from the point of the primary fuel injection to the crank angle of 60° after compression stroke top dead center, wherein the number of times of the secondary injection is reduced by making the secondary fuel injection time longer than the period of the single combustion cycle, when the NOx-reducing catalyst is judged to be in the inactivated state. This approach serves to reduce the amount of NOx discharged from the combustion chamber even more effectively.

According to another embodiment of the invention, the activation state detector detects the temperature of the NOx-reducing catalyst and judges that the NOx-reducing catalyst is in the inactivated state when the detected temperature is equal to or higher than a specific reference temperature.

In this approach, the secondary fuel injection time is advanced to a specific point and the number of times of the secondary injection is reduced when the activation state detector judges that the NOx-reducing catalyst is in the inactivated state with its temperature becoming equal to or higher than the reference temperature, so that the amount of NOx discharged from the combustion chamber is reduced and NOx emissions into the atmosphere are suppressed.

According to still another embodiment of the invention, a first NOx-reducing catalyst is provided in the exhaust passage and a second NOx-reducing catalyst which becomes activated when the first NOx-reducing catalyst is in its inactivated state is provided downstream of the first NOx-reducing catalyst.

In this embodiment of the invention, the secondary fuel injection time is advanced to a specific point and the number of times of the secondary injection is reduced when the activation state detector judges that the first NOx-reducing catalyst is in the inactivated state with its temperature becoming equal to or higher than the reference temperature. Accordingly, a sufficient quantity of reductant passing through the first NOx-reducing catalyst and supplied to the second NOx-reducing catalyst is ensured and the second NOx-reducing catalyst can effectively reduce NOx using the reductant.

In any of the aforementioned embodiments of the invention, the catalytic NOx converter may be formed by depositing catalytic metal on zeolite.

According to this construction, NOx in the exhaust gas can be effectively reduced by using the reductant entrapped in pores within zeolite, which is a porous material, even when the NOx conversion rate of the catalytic NOx converter including the NOx-reducing catalyst is low.

According to another embodiment of the invention, the exhaust-gas cleaning device for an engine comprises a fuel injector for injecting fuel into a combustion chamber, a primary injection controller for controlling mode of primary injection of the fuel from the fuel injector in accordance with engine operating conditions, a secondary injection controller for controlling the fuel injector to make secondary fuel injection at a specific time during a period from the point of the primary fuel injection through an expansion stroke, and a catalytic NOx converter provided in an exhaust passage of the engine for converting at least NOx, wherein the secondary fuel injection is performed at a specific time after the primary fuel injection during a period between crank angles of 30° and 60° after compression stroke top dead center when the engine is under operating conditions in which the amount of NOx delivered to the downstream side of the catalytic NOx converter is large.

In this construction, the secondary fuel injection is performed during the period between crank angles of 30° and 60° after compression stroke top dead center when the amount of NOx delivered to the downstream side of the catalytic NOx converter is large, so that the amount of raw NOx discharged from the combustion chamber into the exhaust passage is reduced. As a consequence, NOx emissions into the atmosphere are suppressed even when the catalytic NOx converter is in its inactivated state.

According to a further embodiment of the invention, an exhaust-gas cleaning device for an engine comprises a fuel injector for injecting fuel into a combustion chamber, a primary injection controller for controlling mode of primary fuel injection performed by the fuel injector at a specific time during a period from an intake stroke to an early part of an expansion stroke in accordance with engine operating conditions, and a secondary injection controller for controlling the fuel injector to make secondary fuel injection at a specific time during a period from the point of the primary fuel injection through the expansion stroke, wherein secondary fuel injection time is set with reference to ending time of diffusion combustion occurring within the combustion chamber by the primary fuel injection.

Since the secondary fuel injection time is set with reference to the ending time of diffusion combustion occurring within the combustion chamber by the primary fuel injection in this construction, carbon is burnt together with the fuel injected by the secondary injection under conditions in which carbon and oxygen existing within the combustion chamber are premixed.

In an embodiment of the invention, the aforementioned exhaust-gas cleaning device further comprises a combustion state discriminator for discriminating the state of diffusion combustion occurring within the combustion chamber by the primary fuel injection, wherein the secondary fuel injection time is set with reference to the ending time of diffusion combustion determined by the combustion state discriminator.

In this construction, the secondary fuel injection time is set with reference to the ending time of diffusion combustion determined by the combustion state discriminator based on a sensing signal fed from a pressure sensor for detecting the pressure within the combustion chamber, a sensing signal fed from a temperature sensor for detecting the temperature within the combustion chamber, a sensing signal fed from a combustion light sensor for detecting a bright light produced by diffusion combustion, or a sensing signal fed from a sensor for detecting the quantity of highly reactive electrically-charged hydrogen and HC existing within the combustion chamber. According to this approach, the secondary fuel injection is made with optimum timing for current engine operating conditions and the amount of soot emission is effectively reduced.

According to another embodiment of the invention, the aforementioned exhaust-gas cleaning device further comprises an exhaust gas recirculator for recirculating part of the exhaust gas back to an intake passage, and an exhaust gas recirculation controller for performing a feedback control operation such that exhaust gas recirculation ratio determined by the exhaust gas recirculator becomes equal to a target value.

In this construction, when the exhaust gas pressure increases due to the secondary fuel injection made at a specific time after the primary fuel injection and the amount of intake air increases due to the supercharging effect of the turbocharger, the exhaust gas recirculation controller performs the feedback control operation to correspondingly increase the amount of exhaust gas recirculated to the intake passage. As a consequence, the amount of raw NOx discharged from the combustion chamber is reduced more effectively.

According to still another embodiment of the invention, the aforementioned exhaust-gas cleaning device further comprises a catalytic NOx converter provided in an exhaust passage of the engine for converting at least NOx, wherein the secondary fuel injection time is set with reference to the ending time of diffusion combustion occurring within the combustion chamber by the primary fuel injection when the catalytic NOx converter is in its inactivated state.

In this construction, the secondary fuel injection time is set with reference to the ending time of diffusion combustion occurring within the combustion chamber by the primary fuel injection when the catalytic NOx converter provided in the exhaust passage of the engine is in the inactivated state. Therefore, an effect of reducing the amount of raw NOx by increasing the quantity of highly reactive electrically-charged hydrogen and HC existing within the combustion chamber and an effect of reducing the quantity of soot by accelerated burning of carbon residue are obtained simultaneously.

According to yet another embodiment of the invention, when the catalytic NOx converter is in its activated state, the secondary fuel injection time is set such that a sufficient quantity of reductant supplied to the catalytic NOx converter is ensured, and when the catalytic NOx converter is in its inactivated state, the secondary fuel injection time is set with reference to the ending time of diffusion combustion occurring within the combustion chamber by the primary fuel injection by advancing the primary fuel injection time.

In this construction, a sufficient quantity of reductant supplied to the catalytic NOx converter is ensured when the catalytic NOx converter is in its activated state, so that NOx emissions into the atmosphere are suppressed by NOx-converting function of the catalytic NOx converter. Also, the secondary fuel injection time is set such that the fuel supplied by the secondary injection would combust approximately at the ending time of diffusion combustion when the catalytic NOx converter is in its inactivated state, so that the amount of raw NOx discharged from the combustion chamber into the exhaust passage is reduced effectively.

In any of the aforementioned embodiments of the invention, the amount of fuel supplied by the secondary injection may preferably be set between 0.2% and 50% of the total amount of fuel injected.

When the secondary injection is set within a range of 0.2% to 50% of the total amount of fuel injected, it is possible to effectively reduce the amount of soot emission without increasing fuel consumption.

In a further embodiment of the invention, a method of setting fuel injection timing in an engine comprising a fuel injector for injecting fuel into a combustion chamber, a primary injection controller for controlling mode of primary fuel injection performed by the fuel injector at a specific time during a period from an intake stroke to an early part of an expansion stroke in accordance with engine operating conditions, and a secondary injection controller for controlling the fuel injector to make secondary injection of the fuel at a specific time during a period from the point of the primary fuel injection through the expansion stroke, includes the step of setting secondary fuel injection time using a secondary injection controller with reference to ending time of diffusion combustion occurring within the combustion chamber by the primary fuel injection.

Since the secondary fuel injection time is set with reference to the ending time of diffusion combustion occurring within the combustion chamber by the primary fuel injection in this method of the invention, the secondary fuel injection is made under conditions in which carbon and oxygen existing within the combustion chamber are premixed and carbon is burnt together with the fuel. Consequently, generation of soot formed of an aggregate of carbon particles can be effectively suppressed.

## BRIEF DESCRIPTION OF THE DRAWINGS

FIG. 1 is a general configuration diagram showing an exhaust-gas cleaning device for an engine according to a first embodiment of the invention;

FIG. 2 is a flowchart showing an exhaust gas recirculation control operation;

FIG. 3 is a graphical presentation of a map used for setting a basic exhaust gas recirculation ratio;

FIG. 4 is a graphical presentation of a map used for setting a target fresh air quantity;

FIG. 5 is a graph showing the relationship between the quantity of smoke and air-fuel ratio;

FIG. 6 is a graph showing the relationship between NOx conversion rate and catalyst temperature;

FIG. 7 is a flowchart showing a first half of a control operation performed in the exhaust-gas cleaning device of the first embodiment;

FIG. 8 is a flowchart showing a second half of the control operation performed in the exhaust-gas cleaning device of the first embodiment;

FIG. 9 is a graph showing an example of relationship between secondary injection time and the amount of raw NOx;
FIG. 10 is a graph showing variations in the amount of raw NOx observed when the frequency of secondary injection was reduced;
FIG. 11 is a graph showing variations in the amount of raw NOx observed when the frequency of secondary injection was further reduced;
FIG. 12 is a general configuration diagram showing an exhaust-gas cleaning device for an engine according to a second embodiment of the invention;
FIG. 13 is a graph showing variations in the concentration of HC in exhaust gas which has passed through a NOx-reducing catalyst;
FIG. 14 is a graph showing the relationship between NOx conversion rate and catalyst temperature;
FIG. 15 is a general configuration diagram showing an exhaust-gas cleaning device for an engine according to a third embodiment of the invention;
FIG. 16 is a flowchart showing a control operation performed in the exhaust-gas cleaning device of the third embodiment;
FIGS. 17A-17C are graphs showing variations in heat release rate in a combustion chamber;
FIGS. 18A-18C are graphs showing the relationship between the secondary injection time and the quantity of soot produced;
FIGS. 19A-19C are graphs showing the relationship between the ratio of the amount of fuel injected by the secondary injection to the total amount of fuel injected and the quantity of soot produced;
FIGS. 20A-20C are graphs showing the relationship between the secondary injection time and the quantity of HC produced;
FIGS. 21A-21C are graphs showing the relationship between the secondary injection time and fuel consumption;
FIGS. 22A-22C are graphs showing the relationship between the secondary injection time and the amount of NOx emissions; and
FIGS. 23A-23C are graphs showing the relationship between the ratio of the amount of fuel supplied by the secondary injection to the total amount of fuel injected and fuel consumption.

**DETAILED DESCRIPTION OF THE PREFERRED EMBODIMENTS OF THE INVENTION**

FIG. 1 shows an exhaust-gas cleaning device for a diesel engine installed on a motor vehicle according to a first embodiment of the invention. An engine body 1 has a plurality of cylinders 2 (of which only one is illustrated), and a piston 3 is fitted in each cylinder 2, forming a combustion chamber 4 therein, in a manner that the piston 3 can reciprocate in the relevant cylinder 2. A fuel injector 5 is provided approximately at the center of the top of the combustion chamber 4 of each cylinder 2 to inject fuel directly into the combustion chamber 4 with specific timing. Further, a water temperature sensor 18 for detecting the temperature of engine cooling water is provided inside a water jacket (not shown) of the engine body 1.
The fuel injectors 5 of the individual cylinders 2 are connected to a common rail 6 which retains high-pressure fuel. The common rail 6 is provided with a pressure sensor 6a for detecting its internal fuel pressure (common rail pressure), and a high-pressure supply pump 8 driven by a crankshaft 7 is connected to the common rail 6. The high-pressure supply pump 8 maintains the fuel pressure inside the common rail 6 detected by the pressure sensor 6a at 20 MPa or above when the engine is at idle and at 50 MPa or above under other engine operating conditions, for example, by controlling fuel supply pressure.
The crankshaft 7 is provided with a crank angle sensor 9 for detecting the angle of rotation of the crankshaft 7. The crank angle sensor 9 is formed of a sensing plate provided at a terminal part of the crankshaft 7 and an electromagnetic pickup placed opposite the outer periphery of the sensing plate. The electromagnetic pickup detects passage of projections formed on the outer periphery of the sensing plate and outputs a pulse signal.
A downstream end of an intake passage 10 connected to the engine body 1 branches out toward the individual cylinders 2 at an unillustrated surge tank, and branched channels of the intake passage 10 are connected to the combustion chambers 4 of the individual cylinders 2 through their intake ports. The surge tank is provided with an intake air pressure sensor 10a for detecting the pressure of intake air supplied to the cylinders 2.
An airflow sensor 11 for detecting the flow rate of intake air drawn into the engine body 1, a blower 12 driven by a later-described turbine 21 for compressing the intake air, an intercooler 13 for cooling the intake air compressed by the blower 12, and an intake throttle valve 14 for varying the area of intake air flow are provided in the intake passage 10 in this order from its upstream side.
The intake throttle valve 14 is formed of a butterfly valve whose valve element (disc) is partially cut out to allow intake air passage even in a fully-closed state. Like a later-described exhaust gas recirculation valve (hereinafter referred to as the EGR valve) 24, the opening of the intake throttle valve 14 is varied as a negative pressure exerted on a diaphragm-type actuator 15 is regulated by a negative-pressure-controlling solenoid valve 16. The intake throttle valve 14 is associated with a sensor for detecting its opening.

An upstream end of an exhaust passage 20 connected to the engine body 1 branches out toward the individual cylinders 2, and branched channels of the exhaust passage 20 are connected to the combustion chambers 4 of the individual cylinders 2 through their exhaust ports. The turbine 21 turned by an exhaust gas flow, a catalytic NOx converter 22 made of a NOx-reducing catalyst for purifying the exhaust gas by reducing at least NOx contained therein, and a NOx sensor 19 for detecting the concentration of NOx in the exhaust gas which has passed through the catalytic NOx converter 22 are provided in the exhaust passage 20 in this order from its upstream side.

The catalytic NOx converter 22 made of the NOx-reducing catalyst includes a cordierite carrier of a honeycomb structure in which a number of through holes extending parallel to each other are made in the direction of the exhaust gas flow, with two catalyst layers formed surrounding the individual through holes. More specifically, the catalyst layers are formed by depositing platinum (Pt) and rhodium (Rh) on MFI zeolite (ZSM5), for example, which is a porous material serving as a support.

The catalytic NOx converter 22 is so constructed as to convert NOx in the exhaust gas by reacting NOx with reductants when an air-fuel mixture in the combustion chambers 4 is lean and the concentration of oxygen in the exhaust gas high, as when the oxygen concentration is 4% or above, for instance. It is to be noted, however, that the catalytic NOx converter 22 of this embodiment has a function as a three-way catalyst even when the oxygen concentration is low.

The airflow sensor 11 provided in the intake passage 10 and the turbine 21 provided in the exhaust passage 20 together constitute a turbocharger 25 made of a variable-geometry turbocharger (VGT). This turbocharger 25 is so constructed as to vary the cross-sectional nozzle area of the exhaust passage 20. The turbocharger 25 is provided with a diaphragm-type actuator 30 for varying the cross-sectional nozzle area and a solenoid valve 31 for controlling a negative pressure exerted on the diaphragm-type actuator 30.

An exhaust gas recirculation passage (hereinafter referred to as the EGR passage) 23 for recirculating part of the exhaust gas is connected to the exhaust passage 20 upstream of the turbine 21. A downstream end of the EGR passage 23 is connected to the intake passage 10 downstream of the intake throttle valve 14. The aforementioned negative-pressure-operated EGR valve 24 whose opening is adjustable is provided in the EGR passage 23 near its downstream end. The EGR valve 24 and the EGR passage 23 together form an exhaust gas recirculation system 33.

An unillustrated valve element of the EGR valve 24 is biased in a closing direction by a spring and biased in an opening direction by a diaphragm-type actuator 24a, whereby the EGR valve 24 linearly adjusts the opening of the EGR passage 23. More specifically, a negative-pressure passage 27 is connected to the diaphragm-type actuator 24a at one end and to a vacuum pump (negative-pressure source) 29 at the opposite end via a negative-pressure-controlling solenoid valve 28. A negative pressure for driving the EGR valve 24 is regulated as the solenoid valve 28 opens or blocks the negative-pressure passage 27, whereby the EGR valve 24 is caused to open and close. The EGR valve 24 is associated with a lift sensor 26 for detecting the position of its valve element.

Operation of the fuel injectors 5, the high-pressure supply pump 8, the intake throttle valve 14, the EGR valve 24 and the turbocharger 25 is controlled by control signals output from a later-described electronic control unit (hereinafter referred to as the ECU) 35. Output signals of the pressure sensor 6a, the crank angle sensor 9, the airflow sensor 11, the water temperature sensor 18 and an acceleration sensor 32, which detects the amount of operation (depression stroke) of an accelerator pedal operated by a driver, are entered to the ECU 35.

The ECU 35 includes a combustion controller 36 for controlling burning conditions of the fuel to obtain required engine output, an activation state detector 37 for determining whether the catalytic NOx converter 22 is already in an activated state, a reductant adder 38 for increasing the quantity of such reductants as HC supplied to the catalytic NOx converter 22, and an exhaust gas recirculation controller 39 for controlling the amount of recirculated exhaust gas by driving the EGR valve 24 in accordance with engine operating conditions.

An exhaust gas recirculation control operation executed by the exhaust gas recirculation controller 39 is now described referring to a flowchart shown in FIG. 2. Following the start of the control operation of the flowchart, data detected by the individual sensors are entered to the ECU 35 (step S1). The exhaust gas recirculation controller 39 then reads out and sets a basic exhaust gas recirculation ratio EGRb corresponding to the engine operating condition from a predefined map based on the accelerator pedal depression stroke detected by the acceleration sensor 32 and engine speed determined from the output signal of the crank angle sensor 9 (step S2). Here, the exhaust gas recirculation ratio refers to the ratio of the quantity of exhaust gas recirculated to the intake passage 10 through the EGR passage 23 to the total quantity of intake air.

The map used for setting the basic exhaust gas recirculation ratio EGRb is a mapping of exhaust gas recirculation ratios experimentally obtained as a function of the accelerator pedal depression stroke and engine speed as shown in FIG. 3, in which the basic exhaust gas recirculation ratio EGRb takes larger values under low-load conditions where the accelerator pedal depression stroke is small. The map is made such that the basic exhaust gas recirculation ratio EGRb takes smaller values in an engine idling range shown by hatching in FIG. 3 than under medium-load conditions of the engine.

Succeeding to step S2 above, the exhaust gas recirculation controller 39 reads out and sets a target fresh air quantity q from a predefined map based on the accelerator pedal depression stroke and engine speed (step S3). The fresh air quantity is a value obtained by subtracting the quantities of recirculated exhaust gas and blowby gas from the total quantity of intake gas introduced into the combustion chambers 4 and is obtained based on the output signal of the airflow sensor 11. The fresh air quantity is closely related to the quantity of recirculated exhaust gas. As a general tendency, the larger the quantity of recirculated exhaust gas, the smaller the fresh air quantity.

The map used for setting the target fresh air quantity q is a mapping of target fresh air quantities experimentally obtained as a function of the accelerator pedal depression stroke and engine speed as shown in FIG. 3, in which the larger the accelerator pedal depression stroke the larger the target fresh air quantity q, and the higher the engine speed the larger the target fresh air quantity q. The map is made such that the target fresh air quantity q takes larger values in the engine idling range shown by hatching in FIG. 4 than under medium-load conditions of the engine.

In a direct injection diesel engine, it is possible to suppress NOx generation by increasing the exhaust gas recirculation ratio. An increase in the exhaust gas recirculation ratio results in a decrease in average air-fuel ratio (richer air-fuel mixture) in the combustion chambers 4. There is a tendency for the quantity of smoke (the quantity of soot) to rapidly increase when the average air-fuel ratio approaches the stoichiometric air-fuel ratio as depicted in FIG. 5. Therefore, the maps used for setting the basic exhaust gas recirculation ratio EGRb and the target fresh air quantity q in the aforementioned steps S2 and S3 are made such that the average air-fuel ratio in the combustion chambers 4 is set to as small a value as possible within a range where the quantity of smoke does not rapidly increase, as shown by A/F*1 in FIG. 5, for instance.

In the engine idling range, the basic exhaust gas recirculation ratio EGRb is set to a smaller value and the target fresh air quantity q is set to a larger value in the respective maps (FIGS. 2 and 3) such that the average air-fuel ratio in the combustion chambers 4 becomes much higher than A/F*1 (leaner mixture), as shown by A/F*2 in FIG. 5. Specifically, when the engine is at idle, the opening of the EGR valve 24 is made relatively small, and when the engine transfers from this condition to a phase of acceleration, the EGR valve 24 is immediately closed such that the quantity of fresh air introduced into the combustion chambers 4 can be quickly increased. This helps improve acceleration performance of the engine and prohibit the air-fuel ratio from becoming momentarily too small (producing a rich mixture) during transition to the acceleration phase, eventually preventing an increase in the quantity of smoke during an early stage of acceleration.

Succeeding to step S3 above, the exhaust gas recirculation controller 39 reads out and sets a feedback correction value EGRf/b for the exhaust gas recirculation ratio from a predefined map based on a deviation of the fresh air quantity obtained by subtracting the target fresh air quantity q from actual fresh air quantity which is determined based on the output signal of the airflow sensor 11 (step S4). The feedback correction value EGRf/b is set to take a negative value when the target fresh air quantity q is larger than the actual fresh air quantity and to a positive value when the target fresh air quantity q is smaller than the actual fresh air quantity. In either case, the large the deviation of the fresh air quantity, the larger the absolute value of the feedback correction value EGRf/b. In the aforementioned map, there is provided a dead zone in a region where the target fresh air quantity q is close to the actual fresh air quantity.

Next, the feedback correction value EGRf/b set in step S2 above is added to the basic exhaust gas recirculation ratio EGRb set in step S3 above to obtain a target exhaust gas recirculation ratio EGRt (step S5). Then, the exhaust gas recirculation controller 39 outputs a control signal corresponding to the target exhaust gas recirculation ratio EGRt to the solenoid valve 28 to thereby drive the EGR valve 24 (step S6) and completes the exhaust gas recirculation control operation of FIG. 2.

In low-load ranges of the engine, the exhaust gas recirculation ratio is basically set to a relatively large value by executing the exhaust gas recirculation control operation described above, so that an adequate amount of recirculated exhaust gas is ensured and the amount of NOx generated by the engine is reduced. As engine load increases, on the other hand, the exhaust gas recirculation ratio is set to progressively smaller values, so that the fresh air quantity gradually increases, providing sufficient engine output corresponding to engine load conditions. Furthermore, when the engine is at idle, the opening of the EGR valve 24 is made relatively small and, therefore, a momentary increase in the quantity of smoke during transition to the acceleration phase is prohibited.

The combustion controller 36 provided in the ECU 35 controls the amount and timing of primary fuel injection from the fuel injectors 5, the common rail pressure, or fuel injection pressure, which is regulated by the high-pressure supply pump 8, as well as the amount of intake air which is regulated by the intake throttle valve 14 in accordance with engine operating conditions, to thereby control fuel-burning conditions to obtain the required engine output.

The activation state detector 37 reads out an estimated value of the temperature of the catalytic NOx converter 22 corresponding to the engine operating condition from a predefined map based on the engine speed determined from the output signal of the crank angle sensor 9 and the engine load determined from the output signal of the acceleration sensor 32, or estimates the temperature of the catalytic NOx converter 22 based on the engine operating condition and exhaust gas temperature detected by an exhaust gas temperature sensor (not shown), and judges whether the catalytic NOx converter 22 is already in its activated state.

Specifically, the catalytic NOx converter 22 is judged to be in its activated state when the temperature of the catalytic NOx converter 22 falls within a temperature range R shown in FIG. 6 where the NOx conversion rate is equal to or larger than a specified value $\alpha$, while the catalytic NOx converter 22 is judged to be in its inactivated state when the catalyst temperature is higher or lower than the temperature range R. A resultant judgment signal is output to the reductant adder 38.

The reductant adder 38 is essentially a secondary injection controller which performs a control operation for making secondary injection to inject the fuel at a specific time during a period from and including an expansion stroke but after the primary fuel injection executed by the combustion controller 36 through an exhaust stroke. The reductant adder 38 increases the quantity of reductants such as HC or carbon monoxide (CO) and controls the secondary injection time depending on whether the catalytic NOx converter 22 is already in its activated state.

More specifically, when the catalytic NOx converter 22 is judged to be in its activated state by the activation state detector 37, the secondary fuel injection is made at a specific time during a period between crank angles (CA) of 60° and 180° after the top dead center (TDC) on a compression stroke, e.g., at 90° (CA) after the compression stroke TDC. The secondary fuel injection is performed in each successive combustion cycle to increase the quantity of reductants such as HC or CO discharged from the combustion chambers 4 to the exhaust passage 20. The amount of fuel supplied by the secondary injection is set to approximately 0.5% to 4% of the amount of fuel supplied by the primary injection.

On the other hand, when the catalytic NOx converter 22 is judged to be in its inactivated state by the activation state detector 37, secondary injection timing is advanced compared to the case where the catalytic NOx converter 22 is in the activated state such that the secondary injection of the fuel is made at a specific time during a period from the point of primary fuel injection to 60° (CA) after the compression stroke TDC, e.g., at a specific time during a period of 40° to 50° (CA) after the compression stroke TDC centering on 45° (CA) after the compression stroke TDC. In this case, the secondary fuel injection is not performed in each successive combustion cycle, but at longer time intervals than the period of the single combustion cycle. Specifically, the number of times the secondary fuel injection is made is reduced to once every 25th combustion cycle, for example. The amount of fuel supplied by the secondary injection during a given period of time is therefore the total amount of fuel supplied by the reduced number of times of the secondary injection in this case.

A control operation performed in the exhaust-gas cleaning device of the present embodiment is described referring to a flowchart shown in FIGS. 7 and 8. Following the start of the control operation of the flowchart, data detected by the individual sensors are entered to the ECU 35 (step S11). Then, primary fuel injection quantity Qb and primary fuel injection time Ib corresponding to the engine operating condition are read out from a predefined map and set (step S12).

Next, a judgment is made to determine whether the engine is in its steady-state operating condition (step S13). If the judgment result in step S13 is in the negative, a combustion cycle count value N is reset to 0 (step S14). If the judgment result in step S13 is in the positive, verifying that the engine is in its steady-state operating condition, the combustion cycle count value N is incremented by 1 (step S15) and a further judgment is made to determine whether the count value N is equal to 25 (step S16).

If the judgment result in step S16 is in the positive, verifying that the count value N is equal to 25, the count value N is reset to 0 (step S17). In this case, the activation state detector 37 judges whether the catalytic NOx converter 22 is at a specific temperature or above where the catalytic NOx converter 22 is in its activated state (step S18), and secondary fuel injection quantity Qp and secondary fuel injection time Ip corresponding to this judgment result are set (step S19).

More specifically, when the catalytic NOx converter 22 is judged to be in its activated state in step S18 above, the secondary fuel injection quantity Qp and the secondary fuel injection time Ip are set such that the secondary fuel injection is made at a specific time during the period between 60° and 180° (CA) after the compression stroke TDC, e.g., at 90° (CA) after the compression stroke TDC, in each successive combustion cycle.

On the other hand, when the catalytic NOx converter 22 is judged to be in its inactivated state in step S18 above, the secondary fuel injection quantity Qp and the secondary fuel injection time Ip are set such that the secondary fuel injection is made at a specific time during the period from the point of primary fuel injection to 60° (CA) after the compression stroke TDC, e.g., at 45° (CA) after the compression stroke TDC, at longer time intervals than the period of the single combustion cycle (in every 25th combustion cycle, for example).

Subsequently, a judgment is made to determine whether the present point in time is the primary fuel injection time Ib (step S20). If the judgment result in step S20 is in the positive, the primary fuel injection is executed (step S21). Further, a judgment is made to determine whether the secondary fuel injection quantity Qp is set to 0 (step S22). If the judgment result in step S22 is in the positive, the control operation of FIGS. 7 and 8 is terminated without making the secondary fuel injection.

If the judgment result in step S22 is in the negative, verifying that the secondary fuel injection quantity Qp is set to a specific value, a judgment is made to determine whether the present point in time is the secondary fuel injection time Ip (step S23). If the judgment result in step S22 is in the positive, the secondary fuel injection is executed (step S24).

As thus far described, the engine exhaust-gas cleaning device of the present embodiment comprises the catalytic NOx converter 22 made of the NOx-reducing catalyst provided in the exhaust passage 20 for converting at least NOx by reacting it with reductants under oxygen-rich conditions in which the oxygen concentration is high, the reductant adder 38 for increasing the quantity of reductants supplied to the catalytic NOx converter 22 by causing the fuel injector 5 to make the secondary injection of the fuel at a specific time during the period from the expansion stroke through the exhaust stroke, as well as the activation state detector 37 for judging whether the catalytic NOx converter 22 is in its activated state, wherein when the activation state detector 37 judges that the catalytic NOx converter 22 is in its inactivated state, the secondary fuel injection timing controlled by the solenoid valve 28 is advanced compared to the case where the catalytic NOx converter 22 is in the activated state. This construction makes it possible to purify the exhaust gas by effectively reducing the amount of NOx released into the atmosphere regardless of whether the temperature of the catalytic NOx converter 22 is lower or higher than its activation temperature.

It is known that the catalytic NOx converter 22 which converts NOx by reacting it with reductants under oxygen-rich conditions exhibits a maximum NOx conversion rate when the catalyst temperature reaches a specific value, and becomes inactive with a reduction in NOx conversion rate as the catalyst temperature drops below or rises beyond the point of the maximum NOx conversion rate, as shown in FIG. 6.

When the catalytic NOx converter 22 is judged to be in its inactivated state, the amount of NOx discharged from the engine can be reduced by advancing the timing of the secondary fuel injection made after the primary fuel injection from the fuel injector 5 in accordance with engine operating conditions compared to the case where the catalytic NOx converter 22 is in the activated state. Therefore, it is possible to effectively reduce the amount of NOx released into the atmosphere even when the catalytic NOx converter 22 is in the inactivated state.

The exhaust-gas cleaning device of the embodiment was experimented with the engine controlled to run at approximately 1500 rpm under high-load conditions. In this experiment, the secondary fuel injection was made in each successive combustion cycle with the secondary fuel injection time Ip advanced in incremental steps from 120° to 30° (CA) after the compression stroke TDC, and an average value of the amount of NOx discharged from the combustion chambers 4 (hereinafter referred to as the amount of raw NOx) when 30 seconds have elapsed from the start of the secondary fuel injection was taken. FIG. 9 shows data obtained from this experiment. It can be seen from FIG. 9 that the amount of raw NOx discharged when the secondary fuel injection is made at 120° (CA) after the compression stroke TDC is approximately same as the amount of raw NOx discharged when the secondary fuel injection is not made that is shown by a line β, whereas the amount of raw NOx is gradually reduced as the secondary fuel injection time Ip is progressively advanced.

Likewise, when the secondary fuel injection was made in every 5th combustion cycle (at intervals of about 0.4 seconds), and in every 25th combustion cycle (at intervals of about 2.0 seconds), with the secondary fuel injection time Ip advanced, data as shown in FIGS. 10 and 11 were obtained, respectively. It can also be seen from FIGS. 10 and 11 that the amount of raw NOx can be reduced by advancing the secondary fuel injection time Ip even when the number of times of the secondary fuel injection is reduced.

It has been verified that an effect of reducing the amount of raw NOx is efficiently obtained by setting the secondary fuel injection time Ip within the period from the point of primary fuel injection where the fuel is injected near the compression stroke TDC up to 60° (CA) after the compression stroke TDC and, in particular, the amount of raw NOx discharged from the combustion chambers 4 can be reduced significantly when the secondary fuel injection time Ip is set close to 45° (CA) after the compression stroke TDC, e.g., within a period of about 40° to 50° (CA) after the compression stroke TDC, and the secondary fuel injection is made in every 25th combustion cycle (at intervals of about 2.0 seconds), as shown in FIG. 11.

The reason why the amount of raw NOx discharged from the combustion chambers 4 can be reduced by advancing the secondary fuel injection time Ip controlled by the reductant adder 38 formed essentially of the secondary injection controller into the period from the point of primary fuel injection up to 60° (CA) after the compression stroke TDC, for example, is supposed to be that the influence of fuel pressure variations within the common rail 6 caused by making the secondary fuel injection in an early period after the primary fuel injection has an effect on the primary fuel injection, resulting in a reduction in the amount of fuel supplied by the primary injection. It is also supposed that the amount of raw NOx is reduced since a large amount of inert gases such as carbon dioxide ($CO_2$) produced by after-burning flows back into the intake passage 10 through the EGR passage 23. The inert gases are recirculated in large quantities because afterburning of the fuel supplied by the secondary injection easily occurs when the secondary fuel injection time Ip is advanced.

If the secondary fuel injection is made at longer time intervals than the period of the single combustion cycle, such as in every 5th combustion cycle (at intervals of about 0.4 seconds) or in every 25th combustion cycle (at intervals of about 2.0 seconds), preferably in every 10th combustion cycle (at intervals of about 0.8 seconds) to 25th combustion cycle (at intervals of about 2.0 seconds), and the amount of fuel supplied by one cycle of the secondary injection is set to 0.2% to 7%, preferably 0.2% to 5%, of the amount of fuel supplied by the primary injection when the catalytic NOx converter 22 is in its inactivated state, the amount of raw NOx discharged from the combustion chambers 4 can be more effectively reduced as depicted in FIGS. 10 and 11. Thus, the exhaust-gas cleaning device of the embodiment has such advantage that it can reduce the amount of NOx released into the atmosphere more effectively.

FIG. 12 is a general configuration diagram showing an exhaust-gas cleaning device according to a second embodiment of the invention comprising a first catalytic NOx converter 22a provided in the exhaust passage 20 and a second catalytic NOx converter 22b which is provided downstream of the first catalytic NOx converter 22a and becomes active when the first catalytic NOx converter 22a is in its inactivated state. In FIG. 12, elements equivalent to those shown in FIG. 1 are designated by the same reference numerals.

In this second embodiment wherein the first catalytic NOx converter 22a having a relatively low activation temperature is provided upstream of the second catalytic NOx converter 22b having a relatively high activation temperature, it is preferable to advance the secondary fuel injection timing and execute the secondary fuel injection at longer time intervals than the period of the single combustion cycle, e.g., in every 25th combustion cycle (at intervals of about 2.0 seconds), when the activation state detector 37 has detected that the temperature of the first catalytic NOx converter 22a on the upstream side is higher than a reference temperature where it is in the activated state.

Experiments were conducted with the exhaust-gas cleaning device of the second embodiment. These included a first experiment A in which the secondary fuel injection was made at the point of 90° (CA) after the compression stroke TDC in each successive combustion cycle, a second experiment B in which the secondary fuel injection was made at the point of 90° (CA) after the compression stroke TDC in every 25th combustion cycle, and a third experiment C in which the secondary fuel injection was made at the point of 45° (CA) after the compression stroke TDC in every 25th combustion cycle. In these experiments, the amount of HC downstream of the NOx-reducing catalyst was measured and data as shown in FIG. 13 was obtained.

It has been verified from the data shown in FIG. 13 that the amount of HC downstream of the NOx-reducing catalyst significantly increased in the third experiment C, in which the secondary fuel injection was made at the point of 45° (CA) after the compression stroke TDC in every 25th combustion cycle, compared to the first and second experiments A, B. The reason why such an increase in the amount of HC occurs is supposed to be that when afterburning of the fuel is accelerated by advancing the secondary fuel injection timing to a specific time during the period from the point of primary fuel injection to 60° (CA) after the compression stroke TDC, e.g., to the point of 45° (CA) after the compression stroke TDC, and the amount of fuel supplied by one cycle of the secondary injection is increased by making the secondary fuel injection at longer time intervals than the period of the single combustion cycle, considerable pressure variations occur in the exhaust passage 20, causing large quantities of HC to flow to the downstream side of the NOx-reducing catalyst at points of high exhaust gas pressure.

Therefore, in an engine in which the second catalytic NOx converter 22b having a high activation temperature is provided downstream of the first catalytic NOx converter 22a, when the first catalytic NOx converter 22a is in the inactivated state with its temperature higher than the activation temperature, it is possible to flow large quantities of HC and other components to the downstream side of the first catalytic NOx converter 22a and supply these components to the second catalytic NOx converter 22b by advancing the secondary fuel injection timing to a specific time during the period from the point of primary fuel injection to 60° (CA) after the compression stroke TDC within a temperature range T3 shown in FIG. 14, for example, and executing the secondary fuel injection at longer time intervals than the period of the single combustion cycle. As the second catalytic NOx converter 22b reduces NOx using HC and other components, it is possible to effectively decrease the amount of NOx released into the atmosphere.

In a temperature range T1 in which the first catalytic NOx converter 22a is in the inactivated state with its temperature lower than the activation temperature, on the other hand, the secondary fuel injection timing is advanced to a specific time and the secondary fuel injection is made in each successive combustion cycle or at longer time intervals than the period of the single combustion cycle. Also, in a temperature range T2 in which the first catalytic NOx converter 22a is in the activated state, the secondary fuel injection is made during a period from the point of primary fuel injection to 90° (CA) after the compression stroke TDC in each successive combustion cycle in an ordinary fashion such that HC and other components which work as reductants are supplied to the first catalytic NOx converter 22a. As an alternative, there may be provided an uncontrolled temperature range in which the secondary fuel injection is not made between the temperature range T2 in which the first catalytic NOx converter 22a is in its activated state and the temperature range T3 in which the second catalytic NOx converter 22b is in its activated state.

The aforementioned exhaust-gas cleaning devices of the first and second embodiments are so constructed as to increase the quantity of reductants in the exhaust gas by making the secondary fuel injection at a specific time during the period from the expansion stroke through the exhaust stroke. This construction may be modified such that the quantity of reductants is increased by retarding the timing of the primary fuel injection which is set in accordance with the engine load, and when the activation state detector 37 judges that the catalytic NOx converter 22 is in its inactivated state, the amount of raw NOx is reduced by reducing the amount of retardation of the primary fuel injection time to advance the primary fuel injection time compared to its setting under ordinary conditions.

This means that the quantity of reductants in the exhaust gas can be increased by retarding the primary fuel injection time which is set in accordance with the engine load and thereby increasing the quantity of unburned fuel components such as HC or CO discharged from the combustion chambers 4. In this case, it is preferable to make pilot injection of a small quantity of fuel during a first half of intake stroke, for instance, prior to the primary fuel injection to prevent deterioration of fuel ignitability.

When the activation state detector 37 determines that the catalytic NOx converter 22 is in its inactivated state, it is possible to reduce the amount of raw NOx by advancing the primary fuel injection time compared to its setting under ordinary conditions, that is, by reducing the amount of retardation of the primary fuel injection time, and increasing the quantity of inert gases recirculated to the intake passage 10 through the EGR passage 23, for example. Therefore, it is possible to reduce the amount of NOx released into the atmosphere in this modified construction as well.

Since the catalytic NOx converter 22 (first and second catalytic NOx converters 22a, 22b) formed by depositing catalytic metal including platinum on zeolite like MFI zeolite, which is a porous material, is provided in the exhaust passage 20 in the aforementioned first and second embodiments, there is an advantage that NOx in the exhaust gas can be effectively reduced by using such reductants as HC entrapped in pores within zeolite even when the NOx-reducing catalyst is under oxygen-rich conditions during ordinary engine operation or when the NOx-reducing catalyst is in the inactivated state due to low catalyst temperature.

While the foregoing first and second embodiments have dealt with examples in which the catalytic NOx converter 22 (first and second catalytic NOx converters 22a, 22b) made of the NOx-reducing catalyst is provided in the exhaust passage 20, the present invention is also applicable to an engine provided with a NOx-converting catalyst made of a NOx-trapping catalyst, for example, containing alkaline-earth metal like barium (Ba) and noble metal like platinum (Pt) which purifies the exhaust gas by absorbing NOx under oxygen-rich conditions and releasing NOx under reductant-rich conditions. This alternative is advantageous in that emission of NOx into the atmosphere can be effectively prevented when the temperature of the NOx-trapping catalyst is higher than a specific high temperature or lower than a specific low temperature resulting in a deterioration of its NOx-trapping performance.

FIG. 15 is a general configuration diagram showing an exhaust-gas cleaning device according to a third embodiment of the invention. Provided in a diesel engine having fuel injectors 5 for injecting fuel into individual combustion chambers 4, a primary injection controller 40 for controlling mode of primary fuel injection from the fuel injectors 5 in accordance with engine operating conditions, a secondary injection controller 41 for controlling the fuel injectors 5 to make secondary injection of the fuel at a specific time during a period from the point of the primary fuel injection through the expansion stroke, and a catalytic NOx converter 22 made of a NOx-reducing catalyst or a NOx-trapping catalyst, for instance, provided in an exhaust passage 20 of the engine for reducing the amount of NOx released into the atmosphere, the exhaust-gas cleaning device of the third embodiment is so constructed as to decrease NOx emissions into the atmosphere by making the secondary fuel injection at a specific time after the primary fuel injection during a period of 30° to 60° (CA) after the compression stroke TDC when the engine is under such operating conditions that the amount of raw NOx discharged from the combustion chambers 4 is large, such as when the engine is under medium or higher load and speed conditions, or when the catalytic NOx converter 22 is in its inactivated state.

In the diesel engine shown in FIG. 15, it is also possible to reduce the quantity of soot produced by the primary fuel injection by making the secondary fuel injection at a specific time after the primary fuel injection. When the engine is under such operating conditions that the quantity of soot discharged from the combustion chambers 4 tends to be large, such as when the engine is under medium or higher load conditions or under medium or higher speed conditions with an engine speed of about 2000 rpm or above, or when the engine is provided with a diesel particulate filter (DPF) installed in the exhaust passage 20 but its filtering performance is still low due to low temperature (300°C or less), it is possible to reduce the quantity of soot by making the secondary fuel injection at a specific time during a period set with reference to a point in time when diffusion combustion of the fuel supplied by the primary injection finishes (between 30° and 60° (CA) after the compression stroke TDC when the engine speed is 1500 rpm or above).

The aforementioned primary fuel injection refers to injection of the fuel in which the amount of fuel corresponding to the required engine output or above is injected at a specific time from the intake stroke through an early part of the expansion stroke. The secondary fuel injection is made to reduce the quantity of soot which occurs when the whole or part of the fuel supplied by the primary fuel injection is burnt by diffusion combustion. If the primary fuel injection is made during a period from the proximity of the compression stroke TDC through the early part of the expansion stroke, the fuel is burnt mostly by premixed combustion under low-load conditions, and by both premixed combustion and diffusion combustion under other conditions than low-load conditions.

If the primary fuel injection is made during a period from the intake stroke to a point before the compression stroke TDC, the fuel is burnt mostly by premixed combustion which does not produce soot. If, however, the fuel adhering to wall surfaces of the combustion chambers 4 ignites at the proximity of the compression stroke TDC, diffusion combustion occurs, producing soot. Even in such cases, it is possible to reduce the quantity of soot by making the secondary fuel injection.

While the primary fuel injection has been described as being made only once in the foregoing discussion, it may be divided into two or more cycles including a first cycle of primary fuel injection made at a specific time during the period from the intake stroke to a point before the compression stroke TDC and a second cycle of primary fuel injection made at a specific time during the period from the proximity of the compression stroke TDC through the early part of the expansion stroke.

The construction and working of the exhaust-gas cleaning device of the third embodiment is described more specifically with reference to FIGS. 16 to 23. Referring to a flowchart shown in FIG. 16, data detected by the individual sensors are first entered to the ECU 35 (step S31). Then, primary fuel injection quantity Qb and primary fuel injection time Ib corresponding to required engine torque are read out from a predefined map and set (step S32) and a judgment is made to determine whether the engine is in its steady-state operating condition (step S33).

If the judgment result in step S33 is in the positive, the activation state detector 37 provided in the ECU 35 judges whether the catalytic NOx converter 22 is at a specific temperature or above where the catalytic NOx converter 22 is in its activated state (step S34). If the judgment result in step S34 is in the positive, a judgment is made to determine whether the engine is under medium or higher load conditions (step S35). If the judgment result in step S35 is in the negative, a further judgment is made to determine whether the engine rotation speed (rpm) is under medium or higher speed conditions (step S36).

If the judgment result in step S34 is in the negative, verifying that the catalytic NOx converter 22 is in its inactivated state, if the judgment result in step S35 is in the positive, verifying that the engine is under medium or higher load conditions, or if the judgment result in step S36 is in the positive, verifying that the engine is under medium or higher speed conditions, secondary fuel injection quantity Qp and secondary fuel injection time Ip corresponding to the engine operating condition are read out from a predefined map and set (step S37), whereby the secondary fuel injection timing is set at a specific time after the primary fuel injection during the period of 30° to 60° (CA) after the compression stroke TDC and the operation flow proceeds to step S38, in which fuel injection is executed.

When the exhaust-gas cleaning device is so constructed as to make the secondary fuel injection after the primary fuel injection during the period of 30° to 60° (CA) after the compression stroke TDC, for instance, combustion of the fuel supplied by the secondary injection occurs when diffusion combustion occurring after premixed combustion of the fuel supplied into the combustion chambers 4 by the primary injection has finished. Thus, mixing of soot and oxygen existing within the combustion chambers 4 at the end of diffusion combustion is accelerated and combustion due to the secondary fuel injection begins in an easily ignitable state, so that generation of soot can be suppressed.

Now, ending time of diffusion combustion is described in detail. The ending time of diffusion combustion is calculated based on heat release rate. According to "Lectures on Internal-Combustion Engines" (written by Fujiwo Nagao and published by Yokendo Co., Ltd.), the heat release rate is expressed by equation (1) below:

$$dQ/d\theta = A/(K(\theta) - 1) \times [V(\theta)\cdot(dP(\theta)/d\theta) + K(\theta)\cdot P(\theta)\cdot(dV(\theta)/d\theta)] \quad (1)$$

where A is the mechanical equivalent of heat, K(θ) is the ratio of specific heats, V(θ) is stroke volume, P(θ) is the pressure in a cylinder, and θ is the crank angle.

According to a manual of combustion analyzer CB566 manufactured by Ono Sokki Co., Ltd., the ratio of specific heats K(θ) is given by equations (2)-(5) below:

$$K(\theta) = Cp/Cv \quad (2)$$

$$Cp = ap + b(T(\theta)/100) + c(T(\theta)/100)^2 + d(100/T(\theta)) \quad (3)$$

$$Cv = Cp - (A\cdot Ro)/M \quad (4)$$

$$T(\theta) = (P(\theta)\cdot V(\theta))/29.27\cdot G \quad (5)$$

where Cp is isobaric specific heat, Cv is isochoric specific heat, Ro is gas constant, M is the molecular weight of air, T(θ) is gas temperature, G is the weight of gas, and ap, b, c and d are other constants.

From equations (2)-(5) above, the heat release rate dQ/dθ of equation (1) is expressed as a function f(P(θ), V(θ)) of the cylinder pressure P(θ) and stroke volume V(θ). Since the stroke volume V(θ) is expressed by equation (6) below using bore diameter B and stroke S, the heat release rate $dQ/d\theta$ can be written as shown in equation (7):

$$V(\theta) = (\pi \cdot B^2 S/8) \cdot (1 - \cos\theta) \quad (6)$$

$$dQ/d\theta = [f(P(\theta+\Delta\theta), V(\theta+\Delta\theta)) - f(P(\theta), V(\theta))]/\Delta\theta \quad (7)$$

Therefore, if cylinder pressure data for each crank angle is available, it is possible to calculate the heat release rate from that data. FIGS. 17A-17C are graphical representation of the heat release rate obtained in this fashion. The heat release rate first takes a large positive value as a result of combustion caused by the primary fuel injection and drops to zero after completion of diffusion combustion. Thus, the ending time of diffusion combustion can be obtained from time t1 when the heat release rate becomes approximately zero.

Taking into consideration ignition delay time (e.g., about 0.4 to 0.7 ms) predefined according to engine operating conditions, the secondary fuel injection time is advanced by as much as the ignition delay time from the time t1 at which the heat release rate becomes approximately zero such that combustion due to the secondary fuel injection can be started in the proximity of the time t1 calculated as described above in the present embodiment.

While the aforementioned ignition delay time varies with the displacement volume of the engine and fuel injection pressure, it is approximately 0.4 to 0.7 ms when the displacement volume is 1000 to 3000 cc and the fuel injection pressure is 50 to 200 MPa. The aforementioned ignition delay time is longer than ignition delay time (0.1 to 0.3 ms) which occurs when the primary fuel injection is made at the compression stroke TDC. This is because the secondary fuel injection is made when the temperature in the cylinders 2 is relatively low.

The ECU 35 stores output timing of an injection drive signal to each fuel injector 5, wherein the output timing is determined in consideration of the aforementioned ignition delay time as well as dead time (drive delay time) from the point in time when an injector open/close signal is output to the point in time when fuel injection actually begins.

Assuming that the engine is under medium-load, medium-speed conditions with the engine speed controlled to 2000 rpm and mean effective pressure Pe controlled to 0.57 MPa, for example, the heat release rate within the combustion chambers 4 obtained when the primary fuel injection is made at the compression stroke TDC was thermodynamically calculated and graphed based on pressure variations within the cylinders 2 and their volume variations. As can be seen from FIG. 17B, it has been verified that there occur heat release Y due to premixed combustion of the fuel supplied by the primary fuel injection after a delay time Tm of about 0.1 ms from primary injection time t0 as well as heat release K of approximately the same level due to diffusion combustion, and that the diffusion combustion terminates at a point in time t1 which is delayed by approximately 0.6 ms from the point of 35° (CA) after the compression stroke TDC.

Therefore, if secondary injection of the fuel is made at time tf which is approximately the point of 35° (CA) after the compression stroke TDC, it is possible to combust the fuel supplied by the secondary injection at the ending time t1 of diffusion combustion. This, in turn, means that the fuel injected by the secondary injection at the time tf begins to burn at the time t1 when an ignition delay time Tf of about 0.6 ms has elapsed, resulting in an increase in the quantity of heat release N.

In contrast, when the engine is under high-load, high-speed conditions with the engine speed controlled to 2500 rpm and the mean effective pressure Pe controlled to 0.9 MPa, for example, heat release K due to diffusion combustion continues for a considerably long time compared to the aforementioned heat release K due to premixed combustion, and this diffusion combustion tends to terminate at a later point in time t1 which is delayed by approximately 0.7 ms from the point of 47° (CA) after the compression stroke TDC, as shown in FIG. 17C. Therefore, if secondary injection of the fuel is made at time tf which is approximately the point of 47° (CA) after the compression stroke TDC, it is possible to combust the fuel supplied by the secondary injection at the ending time t1 of the diffusion combustion as depicted by a broken line N in FIG. 17C.

Further, when the engine is under low-load, low-speed conditions with the engine speed controlled to 1500 rpm and the mean effective pressure Pe controlled to 0.3 MPa, for example, it is difficult to discriminate between premixed combustion and diffusion combustion by the form of heat release as shown in FIG. 17A. However, the diffusion combustion terminates and the heat release rate becomes zero at a relatively early point in time t1 which is delayed by approximately 0.5 ms from the point of 30° (CA) after the compression stroke TDC. Therefore, if secondary injection of the fuel is made at time tf which is approximately the point of 30° (CA) after the compression stroke TDC, it is possible to combust the fuel supplied by the secondary injection at the ending time t1 of diffusion combustion as depicted by a broken line N in FIG. 17A.

An effect of reducing the quantity of soot by setting the secondary fuel injection timing with reference to the ending time of diffusion combustion is now described. While running the engine under low-load, low-speed conditions with the engine speed controlled to 1500 rpm and the mean effective pressure Pe controlled to 0.3 MPa, the secondary fuel injection timing was varied in various ways and the quantity of soot produced was measured at individual settings. It has been verified from this experiment that the quantity of soot produced is significantly reduced when the secondary fuel injection time is set to a point after the primary fuel injection and later than the point of 30° (CA) after the compression stroke TDC which is supposed to be the point in time tf advanced by as much as the ignition delay time from the ending time t1 of diffusion combustion as shown in FIG. 18A.

Next, while running the engine under medium-load, medium-speed conditions with the engine speed controlled to 2000 rpm and the mean effective pressure Pe controlled to 0.57 MPa, the secondary fuel injection timing was varied in various ways and the quantity of soot produced was measured at individual settings. It has been verified from this experiment that the quantity of soot produced is significantly reduced when the secondary fuel injection time is set to a point after the primary fuel injection and later than the point of 35° (CA) after the compression stroke TDC which is supposed to be the point in time tf advanced by as much as the ignition delay time from the ending time t1 of diffusion combustion as shown in FIG. 18B.

Further, while running the engine under high-load, high-speed conditions with the engine speed controlled to 2500 rpm and the mean effective pressure Pe controlled to 0.9 MPa, the secondary fuel injection timing was varied in various ways and the quantity of soot produced was measured at individual settings. It has been verified from this experiment that the quantity of soot produced is significantly reduced when the secondary fuel injection time is set to a point after the primary fuel injection and later than the point of 47° (CA) after the compression stroke TDC which is supposed to be the point in time tf advanced by as much as the ignition delay time from the ending time t1 of diffusion combustion as shown in FIG. 18C. In the individual experiments mentioned above, the engine load was kept constant and the ratio of the amount of fuel supplied by the secondary injection to the total amount of fuel injected was set to 20%.

In these experiments, the secondary fuel injection was not executed when the secondary fuel injection time was the point of 0° (CA) and, therefore, FIGS. 18A-18C show data obtained when only the primary fuel injection was made in this case.

Next, while running the engine under low-load, low-speed conditions with the engine speed controlled to 1500 rpm and the mean effective pressure Pe controlled to 0.3 MPa, the secondary fuel injection was made at the point of 30° (CA) after the compression stroke TDC, which is supposed to be the point in time tf advanced by as much as the ignition delay time from the ending time t1 of diffusion combustion, and the quantity of soot produced was measured, wherein the ratio (P/T) of the amount of fuel supplied by the secondary injection to the total amount of fuel injected was varied in various ways within a range of 10% to 45%. In this experiment, the quantity of soot produced decreased with an increase in the ratio (P/T) of the amount of fuel supplied by the secondary injection as shown by a solid line in FIG. 19A. On the contrary, when the secondary fuel injection was made at the point of 8° (CA) after the compression stroke TDC, which is supposed to be earlier than the time tf, the quantity of soot produced increased with an increase in the ratio (P/T) of the amount of fuel supplied by the secondary injection as shown by a broken line in FIG. 19A.

Also, while running the engine under medium-load, medium-speed conditions with the engine speed controlled to 2000 rpm and the mean effective pressure Pe controlled to 0.57 MPa, the secondary fuel injection was made at the point of 35° (CA) after the compression stroke TDC, which is supposed to be the point in time tf advanced by as much as the ignition delay time from the ending time t1 of diffusion combustion caused by the primary fuel injection, and at the point of 20° (CA) after the compression stroke TDC, which is supposed to be earlier than the time tf. Further, while running the engine under high-load, high-speed conditions with the engine speed controlled to 2500 rpm and the mean effective pressure Pe controlled to 0.9 MPa, the secondary fuel injection was made at the point of 48° (CA) after the compression stroke TDC, which is supposed to be the point in time tf advanced by as much as the ignition delay time from the ending time t1 of diffusion combustion caused by the primary fuel injection, and at the point of 20° (CA) after the compression stroke TDC, which is supposed to be earlier than the time tf. The quantity of soot produced was measured in the respective experiments, in which data similar to those obtained in the experiment under the low-load, low-speed conditions were obtained as shown in FIGS. 19B and 19C.

It is understood from the above experimental data that, according to the above-described engine exhaust-gas cleaning device and method of setting the fuel injection timing of the invention, in which the secondary fuel injection timing is set with reference to the ending time of diffusion combustion caused by the primary fuel injection within the combustion chambers 4 and the fuel supplied by the secondary injection is ignited at or slightly before or after the ending time of diffusion combustion, the quantity of soot discharged from the combustion chambers 4 into the exhaust passage 20 can be reduced if carbon residue (soot) is effectively burnt by executing the secondary fuel injection under conditions in which carbon and oxygen existing within the combustion chambers 4 are sufficiently mixed at the end of diffusion combustion

Since the ending time of diffusion combustion varies depending on the engine speed and load or the like, the time t1 at which the heat release rate due to diffusion combustion becomes zero should preferably be mapped based on experimental data obtained in various engine operating conditions, as shown in FIGS. 17A-17C, for example, such that the time t1 to be set can be read out from a map.

In one alternative, there may be provided a combustion state discriminator for discriminating the state of diffusion combustion based on a sensing signal fed from a temperature sensor for detecting the temperature within the combustion chambers 4, a sensing signal fed from a combustion light sensor, or a sensing signal fed from a sensor for detecting the quantity of highly reactive electrically charged hydrogen or HC existing within the combustion chambers 4, wherein the combustion state discriminator determines the ending time of diffusion combustion by judging whether the temperature within the combustion chambers 4 after the primary fuel injection has dropped to or below a specific temperature, whether fuel-burning light caused by combustion has disappeared, or whether the quantity of hydrogen or HC has sharply decreased, and the secondary fuel injection timing for a succeeding combustion cycle is set with reference to the ending time of diffusion combustion thus determined. In another alternative, the ending time of diffusion combustion may be determined by calculating a differential of a value obtained by subtracting a temperature change caused by adiabatic expansion from the temperature in the cylinders 2 detected by a temperature sensor and determining a point in time when the differential becomes from a negative value to zero.

As thus far described, if the starting time of secondary fuel injection is set in accordance with individual engine operating conditions with reference to the ending time of diffusion combustion determined based on the engine operating conditions such that combustion caused by the secondary fuel injection would begin in the proximity (±5° in terms of crank angle) of the ending time of diffusion combustion, or preferably immediately after the ending time of diffusion combustion, the secondary fuel injection is made with optimum timing for the engine operating conditions, making it possible to effectively reduce the amount of soot emission.

An effect of reducing NOx emissions according to the third embodiment of the invention is now described. While running the engine under low-load, low-speed conditions with the engine speed controlled to 1500 rpm and the mean effective pressure Pe controlled to 0.3 MPa, the secondary fuel injection timing was varied in various ways within a range of 2.5° to 50° (CA) after the compression stroke TDC and the quantity of HC produced was measured at individual settings. It has been verified from this experiment that the quantity of HC produced markedly increases when the secondary fuel injection time is set to a point after the primary fuel injection and later than the point of 30° (CA) after the compression stroke TDC.

Next, while running the engine under medium-load, medium-speed conditions with the engine speed controlled to 2000 rpm and the mean effective pressure Pe controlled to 0.57 MPa, the secondary fuel injection timing was varied in various ways and the quantity of HC produced was measured at individual settings. It has been verified from this experiment that the quantity of HC produced markedly increases when the secondary fuel injection time is set to a point after the primary fuel injection and later than the point of 35° (CA) after the compression stroke TDC as shown in FIG. 20B.

Further, while running the engine under high-load, high-speed conditions with the engine speed controlled to 2500 rpm and the mean effective pressure Pe controlled to 0.9 MPa, the secondary fuel injection timing was varied in various ways and the quantity of HC produced was measured at individual settings. It has been verified from this experiment that the quantity of HC produced markedly increases when the secondary fuel injection time is set to a point after the primary fuel injection and later than the point of 45° (CA) after the compression stroke TDC as shown in FIG. 20C. In the individual experiments mentioned above, the engine load was kept .constant and the ratio of the amount of fuel supplied by the secondary injection to the total amount of fuel injected was set to 20%.

In these experiments, the secondary fuel injection was not executed when the secondary fuel injection time was the point of 0° (CA) and, therefore, FIGS. 20A-20C show data obtained when only the primary fuel injection was made in this case.

It is understood from the above experimental data that the amount of raw NOx discharged from the combustion chambers 4 into the exhaust passage 20 can be reduced by increasing the quantity of HC produced to thereby increase the quantity of highly reactive hydrogen and HC carrying concentrated electric charge which act as reductants when the secondary fuel injection timing is executed at a point after the primary fuel injection and later than the point of 30° (CA) after the compression stroke TDC.

Furthermore, with the engine operated under low-load, low-speed conditions, medium-load, medium-speed conditions and high-load, high-speed conditions as described above, fuel consumption was measured when the secondary fuel injection timing was varied in various ways within the range of 2.5° to 50° (CA) after the compression stroke TDC, and when the secondary fuel injection was not executed. It has been verified from these experiments that the more the secondary fuel injection timing is delayed, the more the fuel consumption increases as shown in FIGS. 21A-21C. This is because the fuel supplied by the secondary injection becomes less contributory to improvement in engine output with an increase in delay of the secondary fuel injection time. To prevent an increase in fuel consumption, it is preferable to set the secondary fuel injection time to a point after the primary fuel injection but not later than the point of 60° (CA) after the compression stroke TDC.

Therefore, if the secondary fuel injection time is set to a specific time after the primary fuel injection and within the period of 30° to 60° (CA) after the compression stroke TDC, there is produced such an advantageous effect that the exhaust gas can be purified by effectively preventing NOx emissions into the atmosphere without increasing fuel consumption.

Specifically, with the engine operated under low-load, low-speed conditions, medium-load, medium-speed conditions and high-load, high-speed conditions as described above, the amount of NOx released into the atmosphere was measured while varying the secondary fuel injection timing in various ways. It has been verified from these experiments that the exhaust gas can be purified by effectively preventing NOx emissions into the atmosphere without increasing fuel consumption when the secondary fuel injection time is set such that the secondary fuel injection is executed at a specific time after the primary fuel injection and within the period of 30° to 60° (CA) after the compression stroke TDC as shown in FIGS. 22A-22C. In these experiments, the exhaust gas recirculation ratio was kept constant. This is because if the exhaust gas recirculation controller 39 executes the exhaust gas recirculation control operation at the same time with the secondary fuel injection, the amount of raw NOx varies due to an effect of exhaust gas recirculation caused by an increase in exhaust gas pressure and it becomes difficult to accurately ascertain the raw-NOx-reducing effect provided by the secondary fuel injection.

As an alternative to the above-described third embodiment of the invention in which the secondary fuel injection time is set in accordance with the crank angle (CA), the secondary fuel injection time may be set according to timing set by a timer. In this alternative, it is possible to effectively prevent NOx emissions into the atmosphere without increasing fuel consumption by executing the secondary fuel injection at a specific time after the primary fuel injection and within a period of 1.2 ms to 4 ms (CA) after the compression stroke TDC.

As seen in the foregoing discussion, it is possible to reduce both the amount of soot produced and the amount of NOx emissions and set the secondary fuel injection time capable of improving fuel economy with reference to the ending time of diffusion combustion which occurs after the primary fuel injection. When the engine speed is 1500 rpm and the engine load is low, for example, the ending time of diffusion combustion is a point delayed by approximately 0.5 ms from the point of 30° (CA) after the compression stroke TDC. To reduce both the amount of soot produced and the amount of NOx emissions in this case, the secondary fuel injection time should be set to the point of about 30° (CA) after the compression stroke TDC, e.g., between 27° and 35° (CA), wherein the optimum secondary fuel injection time is the point of 30° (CA).

When the engine speed is 2000 rpm and the engine load is of a medium level, the ending time of diffusion combustion is a point delayed by approximately 0.6 ms from the point of 35° (CA) after the compression stroke TDC. Accordingly, the secondary fuel injection time should be set to the point of about 35° (CA) after the compression stroke TDC, e.g., between 33° and 40° (CA), wherein the optimum secondary fuel injection time is the point of 35° (CA). Also, when the engine speed is 2500 rpm and the engine load is high, the ending time of diffusion combustion is a point delayed by approximately 0.7 ms from the point of 47° (CA) after the compression stroke TDC. Similarly, the secondary fuel injection time should be set to the point of about 47° (CA) after the compression stroke TDC, e.g., between 45° and 48° (CA), wherein the optimum secondary fuel injection time is the point of 47° (CA).

In the diesel engine provided with the exhaust-gas-driven turbocharger 25 for supplying the engine with precompressed intake air, the exhaust gas pressure rises and supercharging effect of the turbocharger 25 is increased if a specific amount of fuel is supplied by the secondary injection after the primary injection as stated above. Since the quantity of fresh air introduced into the combustion chambers 4 increases as a consequence, there is produced such an advantageous effect that burning of carbon residue left within the combustion chambers 4 is accelerated and generation of soot is effectively suppressed. In addition, since the ending time of diffusion combustion of the fuel supplied by the primary injection tends to be advanced when the amount of intake air increases due to the supercharging effect of the turbocharger 25, it is possible to further reduce the quantity of soot discharged into the exhaust passage 20 by adjusting the secondary fuel injection time in accordance with the ending time of diffusion combustion and thereby suppressing soot generation effectively.

When the diesel engine having the turbocharger 25 is provided with the exhaust gas recirculation system 33 for recirculating part of the exhaust gas to the intake passage 10 and a feedback control operation is performed such that the exhaust gas recirculation ratio determined by the exhaust gas recirculation controller 39 provided in the ECU 35 becomes equal to a target value, the amount of exhaust gas recirculated back to the intake passage 10 increases when the amount of intake air increases due to the supercharging effect of the turbocharger 25. Thus, there is produced such an advantageous effect that the amount of raw NOx discharged from the combustion chambers 4 into the exhaust passage 20 is reduced more effectively.

Furthermore, when the secondary fuel injection time is set with reference to the ending time of diffusion combustion caused by the primary fuel injection within the combustion chambers 4 in a situation where the catalytic NOx converter 22 made of the NOx-reducing catalyst provided in the exhaust passage 20 of the engine is in its inactivated state, there is an advantage that the aforementioned effect of reducing the amount of raw NOx by increasing the quantity of highly reactive hydrogen within the combustion chambers 4 and the effect of reducing the amount of soot emission by accelerated burning of carbon residue are obtained simultaneously.

In particular, when the exhaust-gas cleaning device is constructed such that the secondary fuel injection time is set at a point in time where a sufficient quantity of reductants supplied to the catalytic NOx converter 22 is ensured, or at a specific time during the period of 60° to 180° (CA) after the compression stroke TDC when the catalytic NOx converter 22 is in its activated state, and the secondary fuel injection time is set by advancing it with reference to the ending time of diffusion combustion when the catalytic NOx converter 22 is in its inactivated state, there are produced such advantageous effects that NOx emissions into the atmosphere can be suppressed by the NOx-converting function of the catalytic NOx converter 22 when it is in the activated state, and the amount of NOx discharged from the combustion chambers 4 into the exhaust passage 20 can be effectively reduced by increasing the quantity of highly reactive hydrogen within the combustion chambers 4, for instance, when the catalytic NOx converter 22 is in the inactivated state.

The experimental data obtained from the earlier-mentioned experiments, in which the relationship between the amount of fuel injected by the secondary injection at about the ending time of diffusion combustion was examined, indicate that the more the ratio (P/T) of the amount of fuel supplied by the secondary injection to the total amount of fuel injected is increased, the more the quantity of soot produced is reduced regardless of whether the engine is under low-load, low-speed conditions, medium-load, medium-speed conditions, or high-load, high-speed conditions, as shown by solid lines in FIGS. 19A-19C.

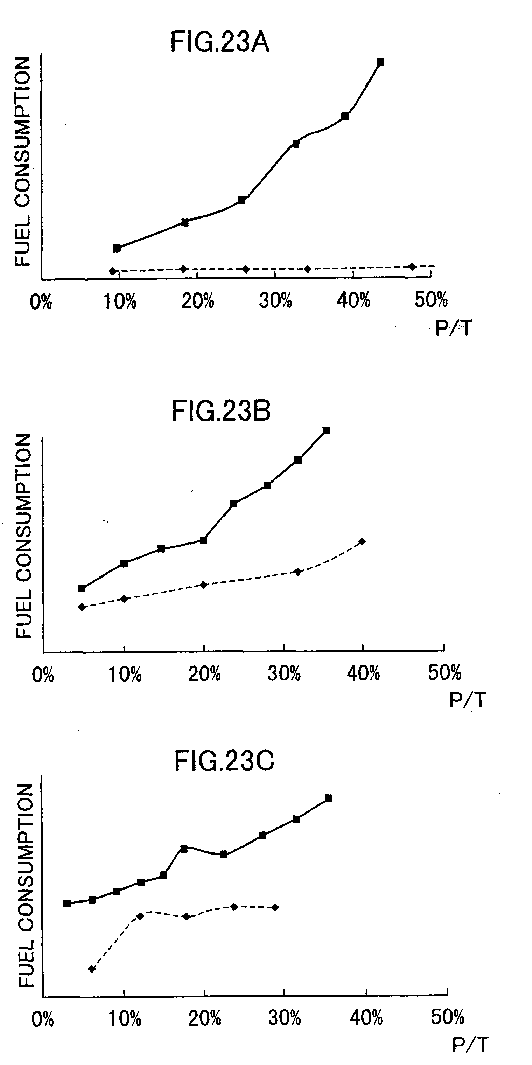

Next, while running the engine under low-load, low-speed conditions, the ratio (P/T) of the amount of fuel supplied by the secondary injection to the total amount of fuel injected was varied in various ways and fuel consumption was measured at individual settings, wherein the secondary fuel injection was made at the point of 8° (CA) after the compression stroke TDC which is supposed to be earlier than the ending time of diffusion combustion. In this experiment, an increase in the ratio (P/T) of the amount of fuel supplied by the secondary injection produced almost no variations occurred in fuel consumption as shown by a broken line in FIG. 23A. Contrary to this, when the secondary fuel injection was made at the point of 30° (CA) after the compression stroke TDC which is in the proximity of the ending time t1 of diffusion combustion caused by the primary fuel injection and supposed to be a point in time when combustion caused by the secondary fuel injection begins, fuel consumption markedly increased with an increase in the ratio (P/T) of the amount of fuel supplied by the secondary injection as shown by a solid line in FIG. 23A.

Also, while running the engine under medium-load, medium-speed conditions, the ratio (P/T) of the amount of fuel supplied by the secondary injection to the total amount of fuel injected was varied in various ways and fuel consumption was measured at individual settings, wherein the secondary fuel injection was made at the point of 35° (CA) after the compression stroke TDC, which is in the proximity of the ending time t1 of diffusion combustion caused by the primary fuel injection and supposed to be a point in time when combustion caused by the secondary fuel injection begins, and at the point of 20° (CA) after the compression stroke TDC, which is supposed to be earlier than the ending time of diffusion combustion. Further, while running the engine under high-load, high-speed conditions, the ratio (P/T) of the amount of fuel supplied by the secondary injection to the total amount of fuel injected was varied in various ways and fuel consumption was measured at individual settings, wherein the secondary fuel injection was made at the point of 48° (CA) after the compression stroke TDC, which is in the proximity of the ending time t1 of diffusion combustion caused by the primary fuel injection and supposed to be a point in time when combustion caused by the secondary fuel injection begins, and at the point of 20° (CA) after the compression stroke TDC, which is supposed to be earlier than the ending time of diffusion combustion. In these experiments, data similar to those obtained in the experiment under the low-load, low-speed conditions were obtained as shown in FIGS. 23B and 23C.

Therefore, if the amount of fuel supplied by the secondary injection is set in a range of 0.2% to 50%, preferably 15% to 35%, in the above-described engine exhaust-gas cleaning device and method of setting the fuel injection timing of the invention, in which the secondary fuel injection timing is set with reference to the ending time of diffusion combustion caused by the primary fuel injection within the combustion chambers 4 and the fuel supplied by the secondary injection is ignited at or slightly before or after the ending time of diffusion combustion, it is possible to effectively reduce the quantity of soot produced without increasing fuel consumption.

Although the foregoing embodiments have thus far been explained with reference to examples in which the secondary fuel injection is controlled in accordance with activation state of the catalytic NOx converter 22, engine load and engine speed, the invention is not limited to this form of embodiment. As an example, a control operation for making secondary injection of the fuel may be executed under all operating conditions of the engine.

Furthermore, although the foregoing discussion of the preferred embodiments has dealt with the examples wherein the invention is applied to the direct injection diesel engine in which the fuel is injected directly into the combustion chambers 4, it is also possible to reduce NOx emissions when the invention is applied to a direct injection gasoline engine which is operated under lean-burn conditions in which a mixture whose air-fuel ratio is higher than the stoichiometric air-fuel ratio is burnt.

## Claims

**1.** An exhaust-gas cleaning device for an engine, said exhaust-gas cleaning device comprising:

a fuel injector (5) for injecting fuel into a combustion chamber (4);
a primary injection controller (40) for controlling mode of primary fuel injection performed by the fuel injector (5) at a specific time during a period from an intake stroke to an early part of an expansion stroke in accordance with engine operating conditions; and
a secondary injection controller (41) for controlling the fuel injector (5) to make secondary fuel injection at a specific time during a period from the point of the primary fuel injection through the expansion stroke;

wherein secondary fuel injection time is set with reference to ending time of diffusion combustion occurring within the combustion chamber by the primary fuel injection, **characterized in that**
a turbocharger (25) driven by exhaust gas is provided for supplying the engine with precompressed intake air;
wherein the secondary fuel injection time is corrected with reference to the ending time of diffusion combustion which varies due to a supercharging effect provided by the turbocharger (25).

**2.** An exhaust-gas cleaning device for an engine according to claim 1, said exhaust-gas cleaning device further comprising:

a combustion state discriminator for discriminating the state of diffusion combustion occurring within the combustion chamber (4) by the primary fuel injection;

wherein the secondary fuel injection time is set with reference to the ending time of diffusion combustion determined by the combustion state discriminator.

**3.** An exhaust-gas cleaning device for an engine according to claim 1 or 2, said exhaust-gas cleaning device further comprising:

an exhaust gas recirculator (23, 24) for recirculating part of the exhaust gas back to an intake passage; and
an exhaust gas recirculation controller (39) for performing a feedback control operation such that exhaust gas recirculation ratio determined by the exhaust gas recirculator becomes equal to a target value.

**4.** An exhaust-gas cleaning device for an engine according to claim 3, further comprising an activation state detector (37) for judging whether the catalytic NOx converter (22) is in its activated state; and wherein said exhaust-gas cleaning device further including a catalytic NOx converter (22) provided in an exhaust passage (20) of the engine for converting at least NOx;
wherein the secondary fuel injection time is set with reference to the ending time of diffusion combustion occurring within the combustion chamber by the primary fuel injection when the catalytic NOx converter (22) is judged to be in its inactivated state by the activation state detector (37).

**5.** An exhaust-gas cleaning device for an engine according to claim 4, wherein when the catalytic NOx converter (22) is in its activated state, the secondary fuel injection time is set such that a sufficient quantity of reductant supplied to the catalytic NOx converter (22) is ensured, and when the catalytic NOx converter (22) is in its inactivated state, the secondary fuel injection time is set with reference to the ending time of diffusion combustion occurring within the combustion chamber (4) by the primary fuel injection by advancing the primary fuel injection time.

**6.** An exhaust-gas cleaning device for an engine according to one of claims 1 to 5, wherein the amount of fuel supplied by the secondary injection is set between 0.2% and 50% of the total amount of fuel injected.

**7.** An exhaust-gas cleaning device for an engine according to claim 1, further comprising a catalytic NOx converter (22) provided in an exhaust passage (20) of the engine for converting at least NOx; and wherein the secondary fuel injection is performed at a specific time after the primary fuel injection during a period between crank angles of 30° and 60° after compression stroke top dead center when the engine is under operating conditions in which the amount of NOx delivered to the downstream side of the catalytic NOx converter (22) is large.

**8.** An exhaust-gas cleaning device for an engine according to claim 7, wherein the catalytic NOx converter (22) includes a NOx-reducing catalyst which purifies the exhaust gas by reducing NOx contained therein as a result of reaction between NOx and the reductant occurring under oxygen-rich conditions in which the concentration of oxygen is high.

**9.** An exhaust-gas cleaning device for an engine according to claim 8, further comprising a reductant adder for increasing the quantity of reductant in exhaust gas by causing the fuel injector (5) to inject the fuel at a specific time during a period from an expansion stroke through an exhaust stroke, and said reductant adder includes a secondary injection controller (41) which controls the fuel injector (5) to make secondary injection of the fuel at a specific time during the period from the expansion stroke through the exhaust stroke after primary injection of the fuel from the fuel injector (5) in accordance with operating conditions of the engine, and wherein the secondary injection controller (41) advances the secondary fuel injection time within a period from the point of the primary fuel injection to a crank angle of 60° after compression stroke top dead center (TDC) when the activation state detector judges that the NOx-reducing catalyst is in the inactivated state.

**10.** An exhaust-gas cleaning device for an engine according to claim 9, wherein the secondary injection controller (41) performs the secondary fuel injection at a longer time interval than the period of a single combustion cycle when the activation state detector (37) judges that the NOx-reducing catalyst is in the inactivated state.

**11.** An exhaust-gas cleaning device for an engine according to claim 10, wherein the activation state detector (37) detects the temperature of the NOx-reducing catalyst and judges that the NOx-reducing catalyst is in the inactivated state when the detected temperature is equal to or higher than a specific reference temperature.

**12.** An exhaust-gas cleaning device for an engine according to claim 11, wherein a first NOx-reducing catalyst (22a) is provided in the exhaust passage (20) and a second NOx-reducing catalyst (22b), which becomes activated when the first NOx-reducing catalyst (22a) is in its inactivated state, is provided downstream of the first NOx-reducing catalyst (22a).

**13.** An exhaust-gas cleaning device for an engine according to one of claims 8 to 12, wherein the catalytic NOx converter (22) is formed by depositing catalytic metal on zeolite.

**14.** A method of setting fuel injection timing in an engine comprising a fuel injector (5) for injecting fuel into a combustion chamber (4), a primary injection controller (40) for controlling mode of primary fuel injection performed by the fuel injector (5) at a specific time during a period from an intake stroke to an early part of an expansion stroke in accordance with engine operating conditions, and a secondary injection controller (41) for controlling the fuel injector (5) to make secondary injection of the fuel at a specific time during a period from the point of the primary fuel injection through the expansion stroke, wherein the secondary injection controller (41) sets secondary fuel injection time with reference to ending time of diffusion combustion occurring within the combustion chamber (4) by the primary fuel injection, **characterized in that**

the engine is supplied with precompressed intake air from a turbocharger (25), wherein the secondary fuel injection time is corrected with reference to the ending time of diffusion combustion which varies due to a supercharging effect provided by the turbocharger (25).

## Patentansprüche

**1.** Emissionsmindemde Abgasreinigungsanlage für einen Motor, wobei diese emissionsmindernde Abgasreinigungsanlage umfaßt:

ein Einspritzaggregat (5), um Kraftstoff in einen Brennraum (4) einzuspritzen;

einen Primäreinspritzungsregler (40), um den Modus der Primärkraftstoffeinspritzung zu steuern, die vom Einspritzaggregat (5) an einem spezifischen Zeitpunkt während einer Periode von einem Ansaughub bis zu einem frühen Abschnitt des Expansionshubs den Motorbetriebsbedingungen entsprechend durchgeführt wird; und

einen Sekundäreinspritzungsregler (41), um das Einspritzaggregat (5) so zu steuern, daß es an einem spezifischen Zeitpunkt während einer Periode vom Punkt der Primärkraftstoffeinspritzung durch den Expansionshub hindurch eine Sekundärkraftstoffeinspritzung durchführt;

wobei der Sekundärkraftstoffeinspritzzeitpunkt in Bezug auf einen Endzeitpunkt der Diffusionsverbrennung geregelt wird, der durch die Primärkraftstoffeinspritzung im Brennraum auftritt, **dadurch gekennzeichnet, daß**
ein abgasbetriebener Turbolader (25) vorgesehen ist, um den Motor mit vorverdichteter Ansaugluft zu versorgen; wobei der Sekundärkraftstoffeinspritzzeitpunkt in Bezug auf einen Endzeitpunkt der Diffusionsverbrennung korrigiert wird, der aufgrund einer Vorverdichtungswirkung des Turboladers (25) variiert.

**2.** Emissionsmindernde Abgasreinigungsanlage für einen Motor nach Anspruch 1, wobei diese emissionsmindernde Abgasreinigungsanlage außerdem umfaßt:

einen Verbrennungszustandsdiskriminator, um den Zustand der Diffusionsverbrennung zu unterscheiden, der durch die Primärkraftstoffeinspritzung im Brennraum (4) auftritt;

wobei der Sekundärkraftstoffeinspritzzeitpunkt in Bezug auf einen Endzeitpunkt der Diffusionsverbrennung geregelt wird, der vom Verbrennungszustandsdiskriminator bestimmt wird.

**3.** Emissionsmindernde Abgasreinigungsanlage für einen Motor nach Anspruch 1 oder 2, wobei diese emissionsmindernde Abgasreinigungsanlage außerdem umfaßt:

einen Abgasrückführer (23, 24), um einen Teil des Abgases zu einer Ansaugleitung rückzuführen; und

einen Abgasrückführungsregler (39), um einen Rückkopplungsregelvorgang so durchzuführen, daß das Abgasrückführungsverhältnis, das vom Abgasrückführer bestimmt wird, einem Sollwert entspricht.

**4.** Emissionsmindernde Abgasreinigungsanlage für einen Motor nach Anspruch 3, außerdem umfassend einen Aktivierungszustandsdetektor (37), um zu beurteilen, ob der NOx-Katalysator (22) in seinem aktivierten Zustand ist; und wobei diese emissionsmindernde Abgasreinigungsanlage außerdem einen NOx-Katalysator (22) umfaßt, der in einer Abgasleitung (20) des Motors vorgesehen ist, um mindestens NOx umzuwandeln;
wobei der Sekundärkraftstoffeinspritzzeitpunkt in Bezug auf einen Endzeitpunkt der Diffusionsverbrennung geregelt wird, die durch die Primärkraftstoffeinspritzung im Brennraum auftritt, wenn vom Aktivierungszustandsdetektor (37) beurteilt wird, daß der NOx-Katalysator (22) in seinem deaktivierten Zustand ist.

**5.** Emissionsmindernde Abgasreinigungsanlage für einen Motor nach Anspruch 4, wobei der Sekundärkraftstoffeinspritzzeitpunkt so geregelt wird, daß der NOx-Katalysator (22) mit einer ausreichenden Menge an Reduktionsmittel versorgt wird, wenn der NOx-Katalysator (22) in seinem aktivierten Zustand ist, und der Sekundärkraftstoffeinspritzzeitpunkt in Bezug auf den Endzeitpunkt der Diffusionsverbrennung geregelt wird, die durch Vorschieben des Primärkraftstoffeinspritzzeitpunkts durch die Primärkraftstoffeinspritzung im Brennraum (4) auftritt, wenn der NOx-Katalysator (22) in seinem deaktivierten Zustand ist.

**6.** Emissionsmindernde Abgasreinigungsanlage für einen Motor nach einem der Ansprüche 1 bis 5, wobei die Kraftstoffmenge, die durch die Sekundäreinspritzung zugeführt wird, auf zwischen 0,2 % und 50 % der Gesamtmenge des eingespritzten Kraftstoffs geregelt ist.

**7.** Emissionsmindernde Abgasreinigungsanlage für einen Motor nach Anspruch 1, außerdem umfassend einen NOx-Katalysator (22), der in einer Abgasleitung (20) des Motors vorgesehen ist, um mindestens NOx umzuwandeln; und wobei die Sekundärkraftstoffeinspritzung an einem spezifischen Zeitpunkt nach der Primärkraftstoffeinspritzung während einer Periode zwischen Kurbelwinkeln von 30° und 60° nach dem oberen Totpunkt im Verdichtungshub durchgeführt wird, wenn der Motor unter Betriebsbedingungen ist, in welchen die NOx-Menge, die an der Austrittsseite des NOx-Katalysators (22) abgegeben wird, groß ist.

**8.** Emissionsmindernde Abgasreinigungsanlage für einen Motor nach Anspruch 7, wobei der NOx-Katalysator (22) einen NOx-reduzierenden Katalysator enthält, der das Abgas reinigt, indem er die darin enthaltenen NOx durch eine Reaktion zwischen NOx und dem Reduktionsmittel reduziert, die unter sauerstoffreichen Bedingungen auftritt, in denen die Sauerstoffkonzentration hoch ist.

**9.** Emissionsmindernde Abgasreinigungsanlage für einen Motor nach Anspruch 8, außerdem umfassend einen Reduktionsmittelzusetzer, um die Menge des Reduktionsmittels im Abgas zu erhöhen, indem das Einspritzaggregat (5) veranlaßt wird, den Kraftstoff an einem spezifischen Zeitpunkt während einer Periode von einem Expansionshub durch einen Auspuffhub hindurch einzuspritzen, und dieser Reduktionsmittelzusetzer einen Sekundäreinspritzungsregler (41) umfaßt, der das Einspritzaggregat (5) steuert, um die Sekundäreinspritzung an einem spezifischen Zeitpunkt nach der Primäreinspritzung des Kraftstoffs aus dem Einspritzaggregat (5) während der Periode vom Expansionshub durch den Auspuffhub hindurch den Betriebsbedingungen des Motors entsprechend durchzuführen, und wobei der Sekundäreinspritzungsregler (41) den Sekundärkraftstoffeinspritzzeitpunkt während einer Periode vom Punkt der Primärkraftstoffeinspritzung bis zu einem Kurbelwinkel von 60° nach dem oberen Totpunkt (TDC) im Verdichtungshub vorschiebt, wenn der Aktivierungszustandsdetektor beurteilt, daß der NOx-reduzierende Katalysator im deaktivierten Zustand ist.

**10.** Emissionsmindernde Abgasreinigungsanlage für einen Motor nach Anspruch 9, wobei der Sekundäreinspritzungsregler (41) die Sekundärkraftstoffeinspritzung in einem längeren Zeitintervall durchführt als die Periode eines einfachen Verbrennungszyklus, wenn der Aktivierungszustandsdetektor (37) beurteilt, daß der NOx-reduzierende Katalysator im deaktivierten Zustand ist.

**11.** Emissionsmindernde Abgasreinigungsanlage für einen Motor nach Anspruch 10, wobei der Aktivierungszustandsdetektor (37) die Temperatur des NOx-reduzierenden Katalysators (22a) erkennt und beurteilt, daß der NOx-reduzierende Katalysator im deaktivierten Zustand ist, wenn die erkannte Temperatur größer oder gleich einer bestimmten Bezugstemperatur ist.

**12.** Emissionsmindernde Abgasreinigungsanlage für einen Motor nach Anspruch 11, wobei ein erster NOx-reduzierender Katalysator (22a) in der Abgasleitung (20) vorgesehen ist und ein zweiter NOx-reduzierender Katalysator (22b), der aktiviert wird, wenn der erste NOx-reduzierende Katalysator (22a) in seinem deaktivierten Zustand ist, hinter dem ersten NOx-reduzierenden Katalysator (22a) vorgesehen ist.

**13.** Emissionsmindernde Abgasreinigungsanlage für einen Motor nach einem der Ansprüche 8 bis 12, wobei der NOx-Katalysator (22) durch Aufbringen von katalytischem Metall auf Zeolithe hergestellt wird.

**14.** Verfahren zur Einstellung des Kraftstoffeinspritzzeitpunkts in einem Motor, umfassend ein Einspritzaggregat (5), um Kraftstoff in einen Brennraum (4) einzuspritzen, einen Primäreinspritzungsregler (40), um den Modus der Primärkraftstoffeinspritzung zu steuern, die vom Einspritzaggregat (5) an einem spezifischen Zeitpunkt während einer Periode von einem Ansaughub bis zu einem frühen Abschnitt des Expansionshubs den Motorbetriebsbedingungen entsprechend durchgeführt wird, und einen Sekundäreinspritzungsregler (41), um das Einspritzaggregat (5) so zu steuern, daß es an einem spezifischen Zeitpunkt während einer Periode vom Punkt der Primärkraftstoffeinspritzung durch den Expansionshub hindurch eine Sekundärkraftstoffeinspritzung durchführt, wobei der Sekundäreinspritzungsregler (41) den Sekundärkraftstoffeinspritzzeitpunkt in Bezug auf einen Endzeitpunkt der Diffusionsverbrennung regelt, der durch die Primärkraftstoffeinspritzung im Brennraum (4) auftritt, **dadurch gekennzeichnet, daß**
der Motor mit vorverdichteter Ansaugluft aus einem Turbolader (25) versorgt wird, wobei der Sekundärkraftstoffeinspritzzeitpunkt in Bezug auf einen Endzeitpunkt der Diffusionsverbrennung korrigiert wird, der aufgrund einer Vorverdichtungswirkung des Turboladers (25) variiert.

**Revendications**

**1.** Dispositif d'épuration de gaz d'échappement pour moteur, ledit dispositif d'épuration de gaz d'échappement comprenant :

un injecteur de carburant (5) pour l'injection du carburant dans une chambre de combustion (4) ;

un dispositif primaire de commande d'injection (40) pour commander le mode d'injection primaire de carburant, exécutée par l'injecteur de carburant (5) à un instant précis au cours d'une période allant d'un temps d'admission jusqu'à une première partie d'un temps d'expansion en accord avec les conditions opératoires du moteur ; et

un dispositif secondaire de commande d'injection (41) pour commander l'injecteur de carburant (5) afin de réaliser l'injection secondaire de carburant à un instant précis au cours d'une période allant du point de l'injection primaire de carburant jusqu'à la fin du temps d'expansion ;

selon lequel le temps d'injection secondaire de carburant est programmé en référence au délai d'achèvement de la combustion par diffusion qui se produit dans la chambre de combustion par l'injection primaire de carburant, **caractérisé en ce qu'**

un turbocompresseur (25) entraîné par les gaz d'échappement est prévu pour alimenter le moteur en air d'admission précomprimé ;

le temps d'injection secondaire de carburant étant corrigé en référence au délai d'achèvement de la combustion par diffusion qui varie du fait d'un effet de turbocompression assuré par le turbocompresseur (25).

**2.** Dispositif d'épuration de gaz d'échappement pour moteur selon la revendication 1, ledit dispositif d'épuration de gaz d'échappement comprenant en outre :

un discriminateur d'état de combustion pour réaliser la discrimination de l'état de combustion par diffusion qui se produit dans la chambre de combustion (4) par l'injection primaire de carburant ;

le temps d'injection secondaire de carburant étant programmé en référence au délai d'achèvement de la combustion par diffusion, déterminé par le discriminateur d'état de combustion.

**3.** Dispositif d'épuration de gaz d'échappement pour moteur selon la revendication 1 ou 2, ledit dispositif d'épuration de gaz d'échappement comprenant en outre :

un équipement de recirculation des gaz d'échappement (23, 24) pour faire recirculer une partie des gaz d'échappement en retour vers un conduit d'admission ; et

un dispositif de commande (39) de recirculation de gaz d'échappement pour procéder à une opération de commande par feedback, de telle façon que le rapport de recirculation de gaz d'échappement, déterminé par l'équipement de recirculation des gaz d'échappement, devienne égal à une valeur cible.

**4.** Dispositif d'épuration de gaz d'échappement pour moteur selon la revendication 3, comprenant en outre un détecteur d'état d'activation (37) afin d'estimer si le pot catalytique pour $NO_x$ (22) est dans son état activé ; et ledit dispositif d'épuration de gaz d'échappement incluant en outre un pot catalytique pour $NO_x$ (22) prévu dans un conduit d'échappement (20) du moteur afin de transformer au moins les $NO_{x;}$
le temps d'injection secondaire de carburant étant programmé en référence au délai d'achèvement de la combustion par diffusion qui se produit dans la chambre de combustion par l'injection primaire de carburant quand on estime que le pot catalytique pour $NO_x$ (22) est dans son état inactivé par le détecteur d'état d'activation (37).

**5.** Dispositif d'épuration de gaz d'échappement pour moteur selon la revendication 4, **caractérisé en ce que,** quand le pot catalytique pour $NO_x$ (22) est dans son état activé, le temps d'injection secondaire de carburant est programmé de façon telle qu'une quantité suffisante de réducteur fournie au pot catalytique pour $NO_x$ (22) est assurée, **et en ce que,** quand le pot catalytique pour $NO_x$ (22) est dans son état inactivé, le temps d'injection secondaire de carburant est programmé en référence au délai d'achèvement de la combustion par diffusion qui se produit dans la chambre de combustion (4) par l'injection primaire de carburant, en avançant l'instant d'injection primaire de carburant.

**6.** Dispositif d'épuration de gaz d'échappement pour moteur selon l'une des revendications 1 à 5, **caractérisé en ce que** la quantité de carburant fournie par l'injection secondaire est programmée entre 0,2 % et 50 % de la quantité totale de carburant injecté.

**7.** Dispositif d'épuration de gaz d'échappement pour moteur selon la revendication 1, **caractérisé en ce qu'il** comprend en outre un pot catalytique pour $NO_x$ (22) prévu dans un conduit d'échappement (20) du moteur pour transformer au moins les $NO_x$; **et caractérisé en ce que** l'injection secondaire de carburant est exécutée à un instant précis postérieur à l'injection primaire de carburant, au cours d'une période correspondant aux valeurs d'angle de maneton comprises entre 30° et 60° après le point mort haut de temps de compression, quand le moteur est dans des conditions opératoires dans lesquelles la quantité de $NO_x$ délivrée côté aval du pot catalytique pour $NO_x$ (22) est grande.

**8.** Dispositif d'épuration de gaz d'échappement pour moteur selon la revendication 7, **caractérisé en ce que** le pot catalytique pour $NO_x$ (22) comprend un catalyseur de réduction des $NO_x$ qui purifie les gaz d'échappement en réduisant les $NO_x$ contenus, suite à la réaction entre les $NO_x$ et le réducteur qui se produit dans des conditions riches en oxygène, dans lesquelles la concentration d'oxygène est élevée.

**9.** Dispositif d'épuration de gaz d'échappement pour moteur selon la revendication 8, **caractérisé en ce qu'**il comprend en outre une unité d'addition de réducteur pour augmenter la quantité de réducteur dans les gaz d'échappement en amenant l'injecteur de carburant (5) à injecter le carburant à un instant précis pendant une période allant d'un temps d'expansion jusqu'à un temps d'échappement, **et en ce que** ladite unité d'addition de réducteur inclut un dispositif secondaire de commande d'injection (41) qui commande l'injecteur de carburant (5) afin de réaliser l'injection secondaire de carburant à un instant précis au cours de la période allant du temps d'expansion jusqu'au temps d'échappement après l'injection primaire du carburant à partir de l'injecteur de carburant (5) en accord avec les conditions opératoires du moteur, et **en ce que** le dispositif secondaire de commande d'injection (41) fait avancer l'instant d'injection secondaire de carburant dans l'intervalle d'une période allant du point de l'injection primaire de carburant jusqu'à un angle de maneton de 60° après le point mort haut (PMH) de temps de compression quand le détecteur d'état d'activation estime que le catalyseur de réduction des $NO_x$ est dans l'état inactivé.

**10.** Dispositif d'épuration de gaz d'échappement pour moteur selon la revendication 9, **caractérisé en ce que** le dispositif secondaire de commande d'injection (41) exécute l'injection secondaire de carburant à un intervalle de temps plus long que la période d'un cycle unique de combustion, quand le détecteur d'état d'activation (37) estime que le catalyseur de réduction des $NO_x$ est dans l'état inactivé.

**11.** Dispositif d'épuration de gaz d'échappement pour moteur selon la revendication 10, **caractérisé en ce que** le détecteur d'état d'activation (37) détecte la température du catalyseur de réduction des $NO_x$ et estime que le catalyseur de réduction des $NO_x$ est dans l'état inactivé quand la température détectée est égale ou supérieure à une température spécifiée de référence.

**12.** Dispositif d'épuration de gaz d'échappement pour moteur selon la revendication 11, **caractérisé en ce qu'**un premier catalyseur de réduction des $NO_x$ (22a) est prévu dans le conduit d'échappement (20) **et en ce qu'**un second catalyseur de réduction des $NO_x$ (22b), qui devient activé quand le premier catalyseur de réduction des $NO_x$ (22a) est dans son état inactivé, est prévu en aval du premier catalyseur de réduction des $NO_x$ (22a).

**13.** Dispositif d'épuration de gaz d'échappement pour moteur selon l'une des revendications 8 à 12, **caractérisé en ce que** le pot catalytique pour $NO_x$ (22) est formé en déposant du métal catalytique sur de la zéolithe.

**14.** Procédé de programmation du délai d'injection de carburant dans un moteur comprenant un injecteur de carburant (5) pour l'injection du carburant dans une chambre de combustion (4), un dispositif primaire de commande d'injection (40) pour commander le mode d'injection primaire de carburant, exécutée par l'injecteur de carburant (5) à un instant précis au cours d'une période allant d'un temps d'admission jusqu'à une première partie d'un temps d'expansion en accord avec les conditions opératoires du moteur, et un dispositif secondaire de commande d'injection (41) pour commander l'injecteur de carburant (5) afin de réaliser l'injection secondaire de carburant à un instant précis au cours d'une période allant du point de l'injection primaire de carburant jusqu'au temps d'expansion, selon lequel le dispositif secondaire de commande d'injection (41) programme le temps d'injection secondaire de carburant en référence au délai d'achèvement de la combustion par diffusion qui se produit dans la chambre de combustion (4) par l'injection primaire de carburant, **caractérisé en ce que**
le moteur est alimenté en air d'admission précomprimé à partir d'un turbocompressseur (25) , et selon lequel le temps d'injection secondaire de carburant est corrigé en référence[U1] au délai d'achèvement de la combustion par diffusion qui varie du fait d'un effet de turbocompression assuré par le turbocompresseur (25).

FIG.1

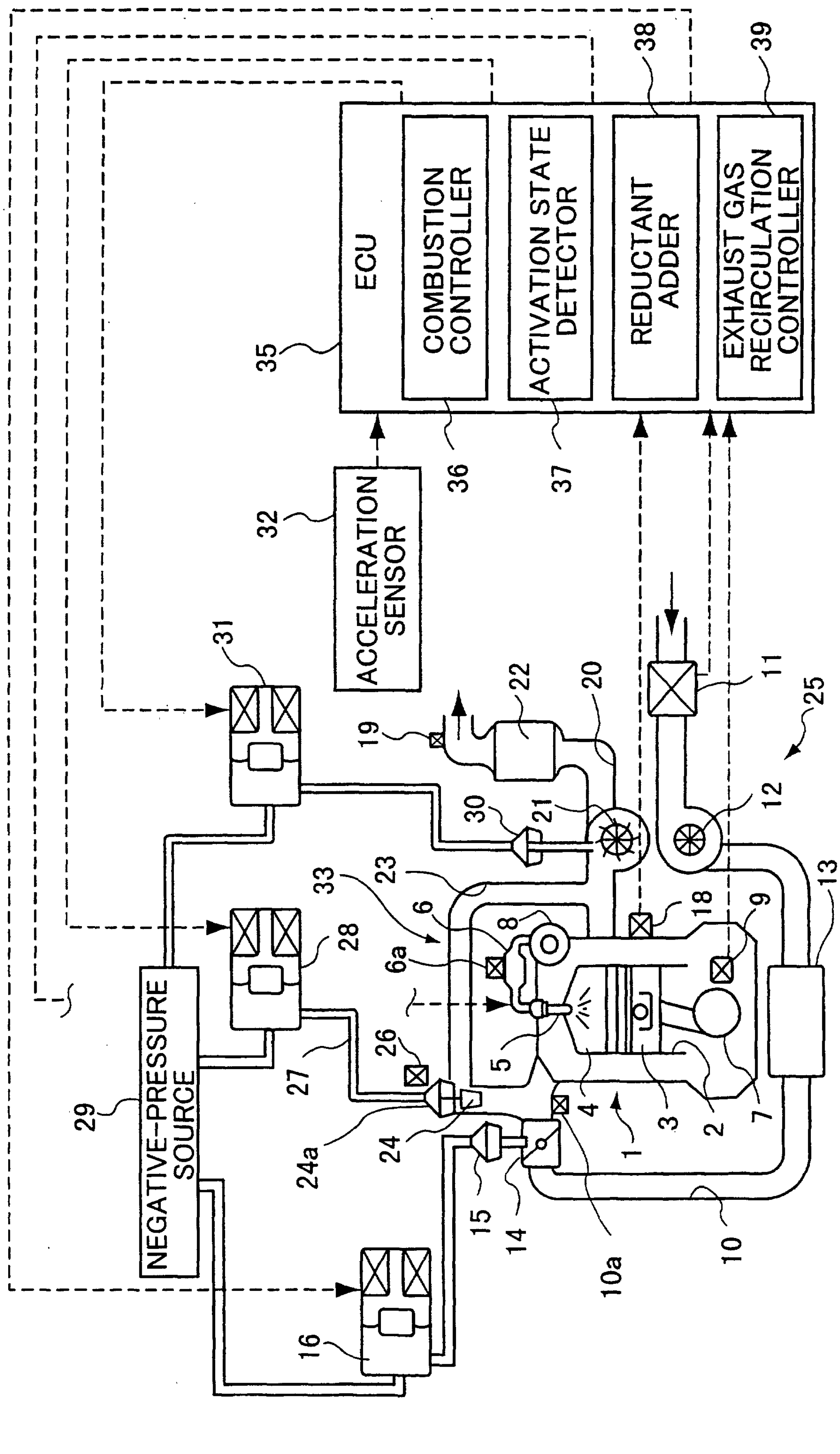
ECU
COMBUSTION CONTROLLER
ACTIVATION STATE DETECTOR
REDUCTANT ADDER
EXHAUST GAS RECIRCULATION CONTROLLER
ACCELERATION SENSOR
NEGATIVE-PRESSURE SOURCE
35
36
37
38
39
32
31
22
19
20
11
25
12
21
30
33
23
6
8
18
9
13
6a
28
26
27
5
4
3
2
7
1
24
24a
15
14
10a
10
29
16

FIG.2

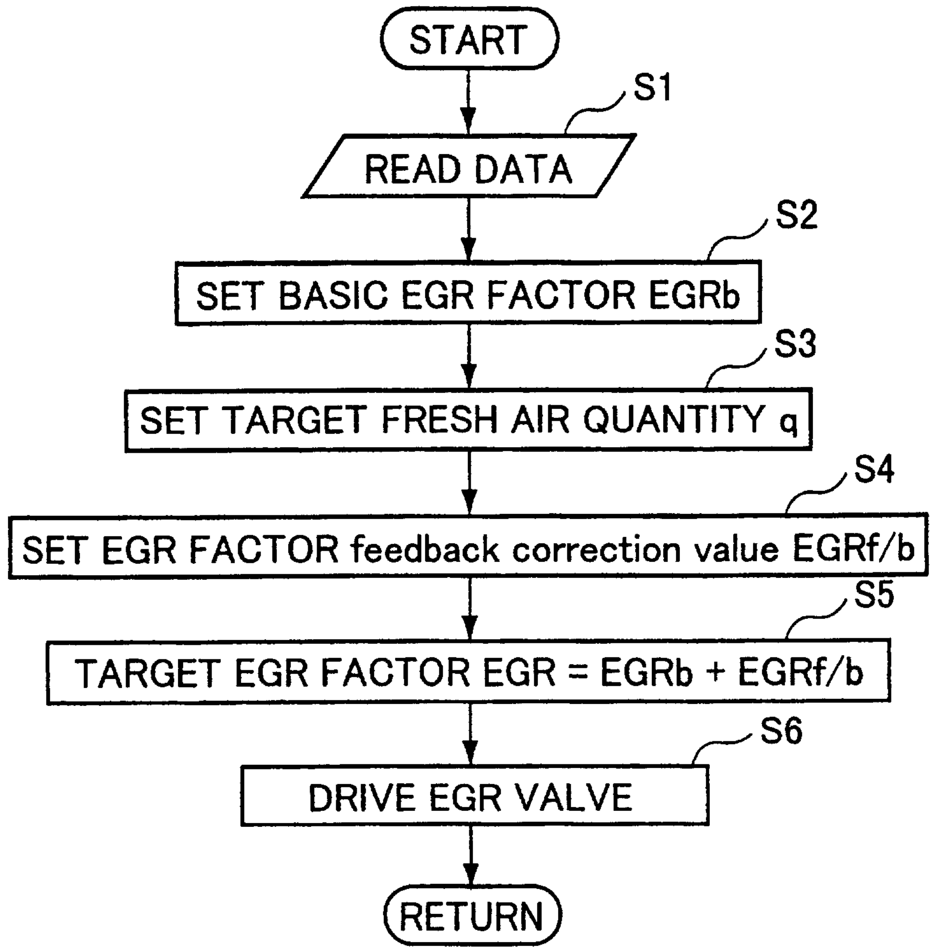
START
S1
READ DATA
S2
SET BASIC EGR FACTOR EGRb
S3
SET TARGET FRESH AIR QUANTITY q
S4
SET EGR FACTOR feedback correction value EGRf/b
S5
TARGET EGR FACTOR EGR = EGRb + EGRf/b
S6
DRIVE EGR VALVE
RETURN

FIG.3

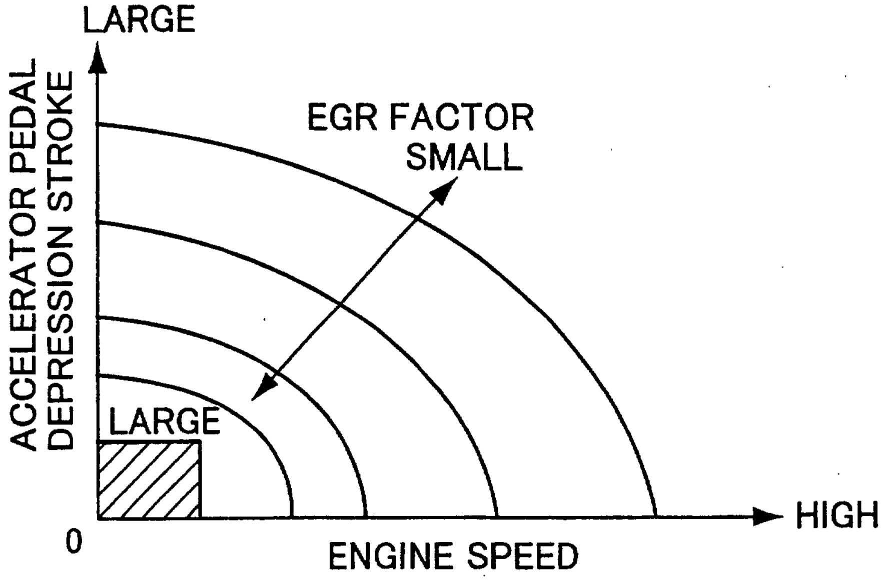
LARGE
ACCELERATOR PEDAL DEPRESSION STROKE
EGR FACTOR SMALL
LARGE
0
ENGINE SPEED
HIGH

FIG.4

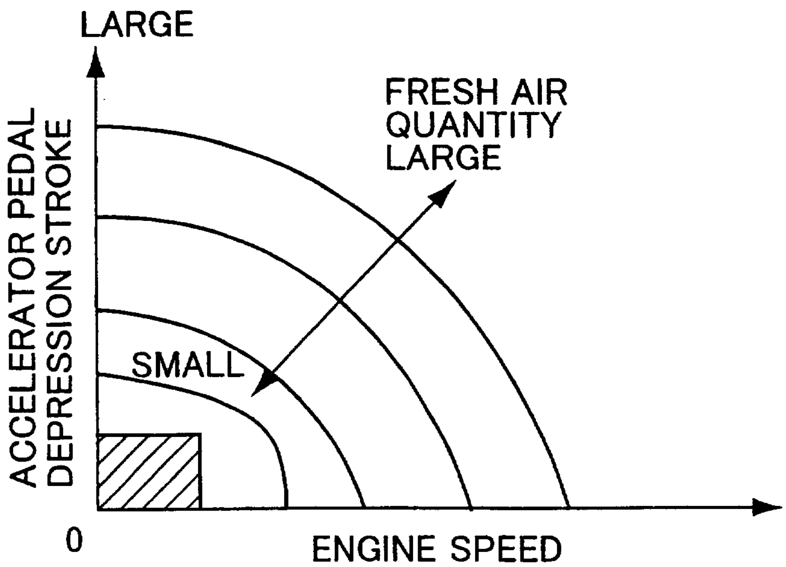
LARGE
ACCELERATOR PEDAL DEPRESSION STROKE
FRESH AIR QUANTITY LARGE
SMALL
0
ENGINE SPEED

FIG.5

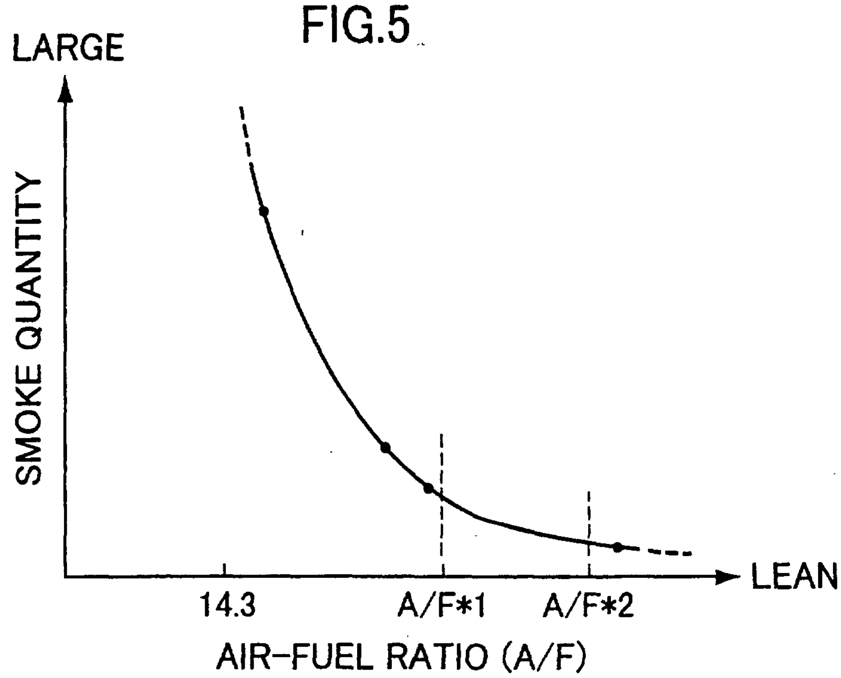
LARGE
SMOKE QUANTITY
LEAN
14.3
A/F*1
A/F*2
AIR-FUEL RATIO (A/F)

FIG.6

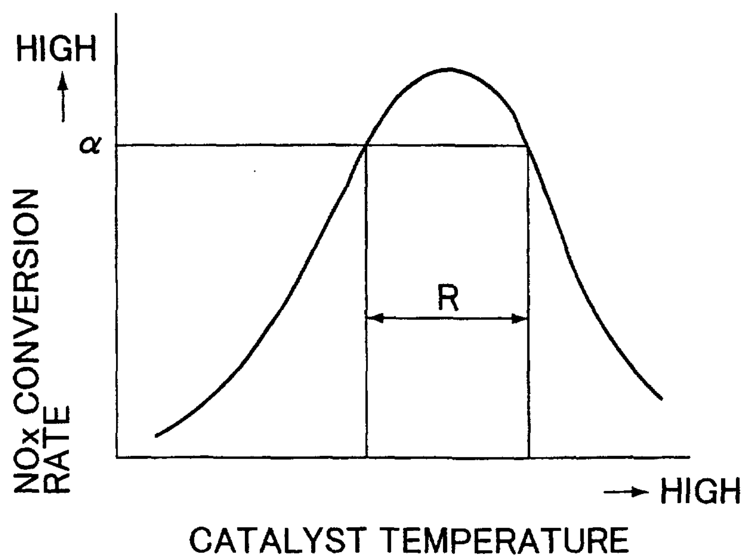
HIGH
α
NOx CONVERSION RATE
R
HIGH
CATALYST TEMPERATURE

FIG.7

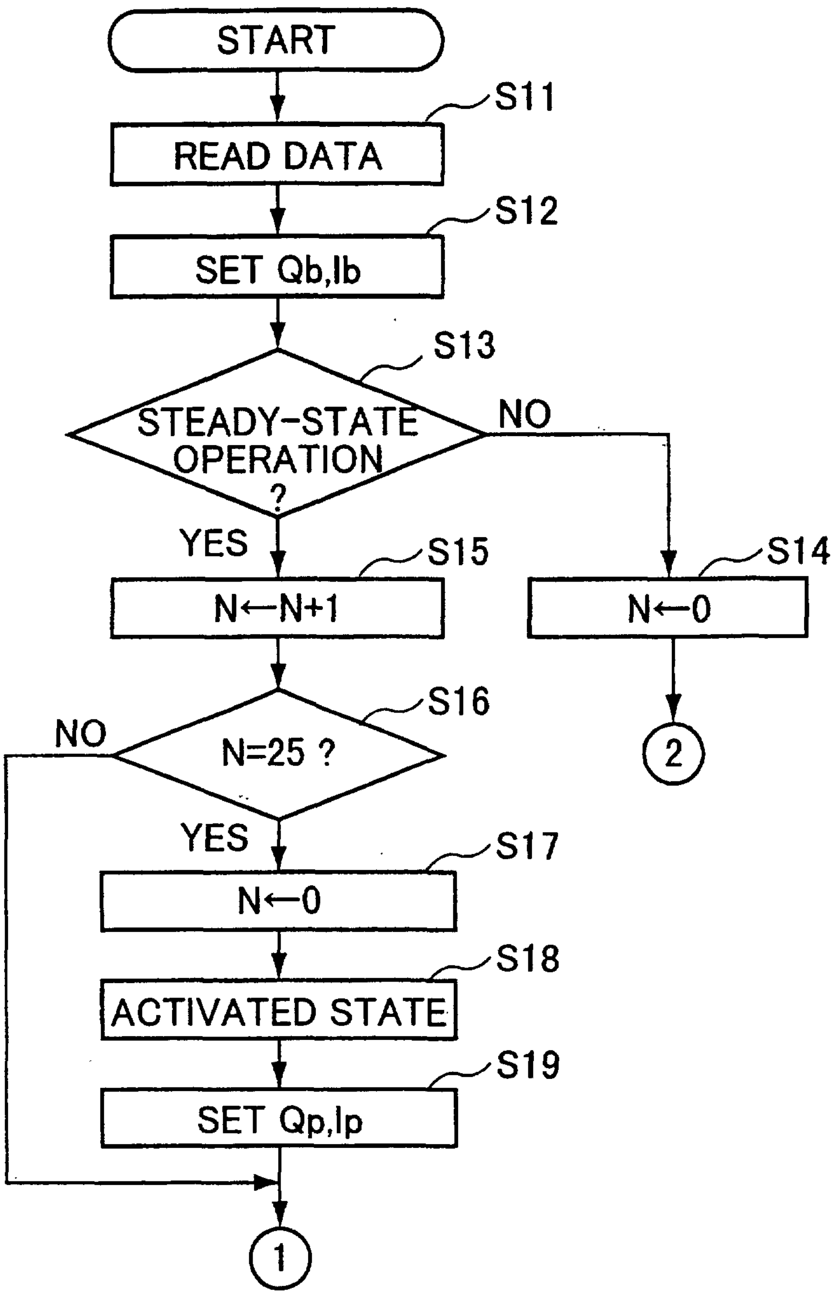
START
S11
READ DATA
S12
SET Qb,Ib
S13
STEADY-STATE OPERATION ?
NO
YES
S15
N←N+1
S14
N←0
2
S16
N=25 ?
NO
YES
S17
N←0
S18
ACTIVATED STATE
S19
SET Qp,Ip
1

FIG.8

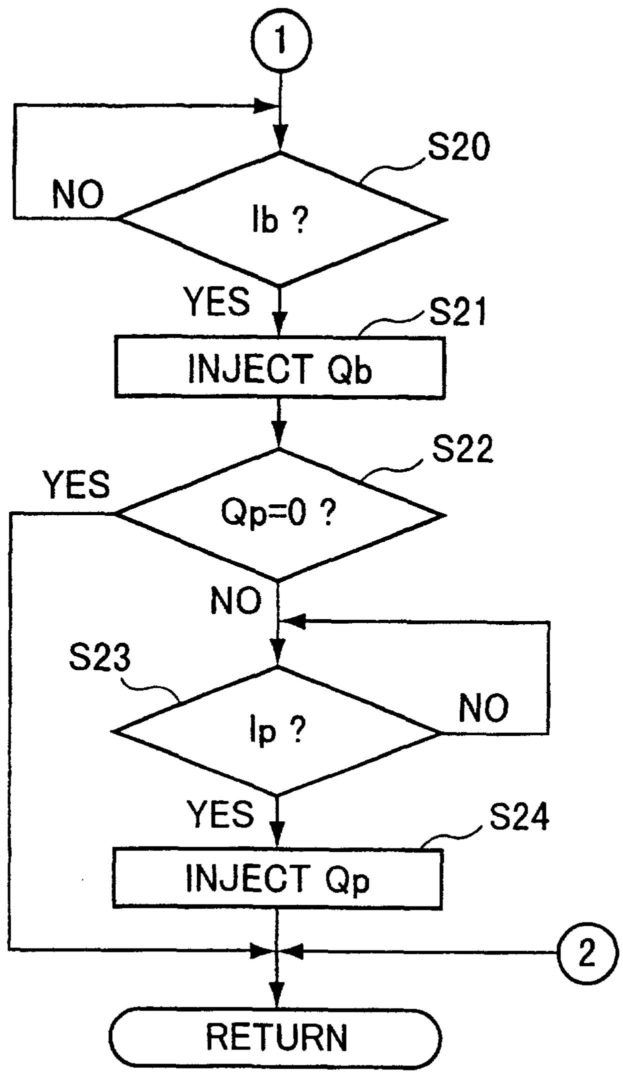
1
S20
NO
Ib ?
YES
S21
INJECT Qb
S22
YES
Qp=0 ?
NO
S23
Ip ?
NO
YES
S24
INJECT Qp
2
RETURN

FIG.9

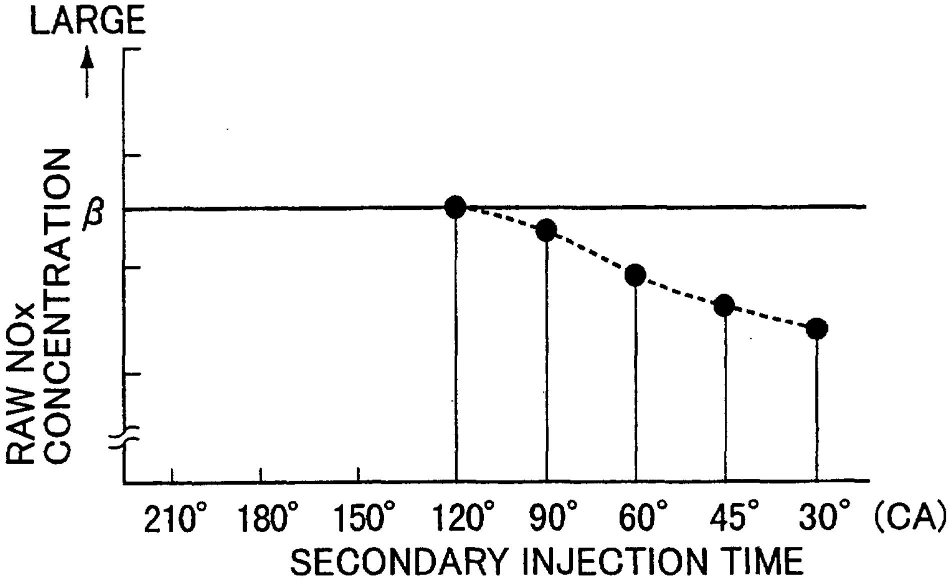
LARGE
RAW NOx CONCENTRATION
β
210° 180° 150° 120° 90° 60° 45° 30° (CA)
SECONDARY INJECTION TIME

FIG.10

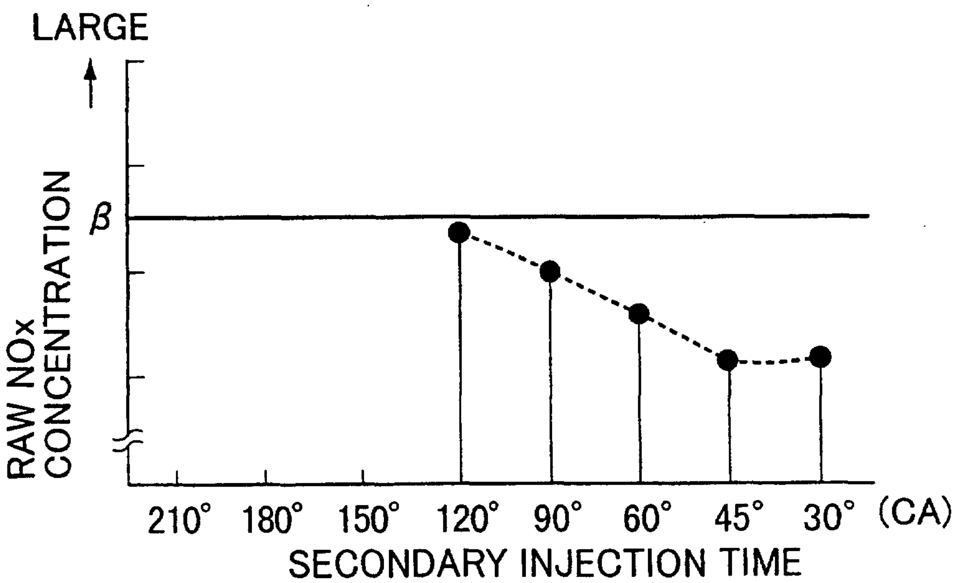
LARGE
RAW NOx CONCENTRATION
β
210° 180° 150° 120° 90° 60° 45° 30° (CA)
SECONDARY INJECTION TIME

FIG.11

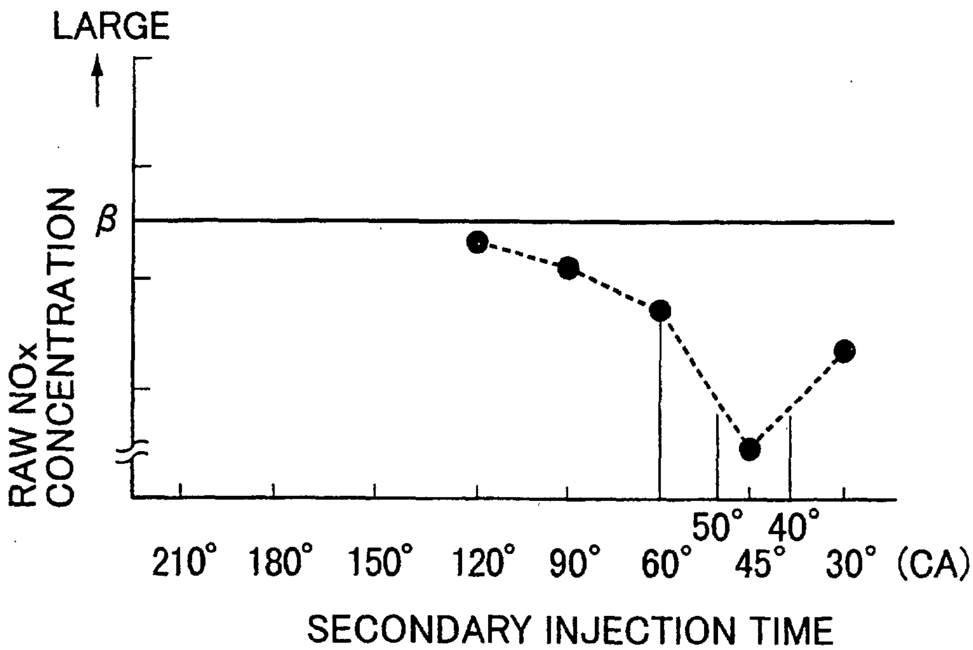
LARGE
RAW NOx CONCENTRATION
β
210° 180° 150° 120° 90° 60° 45° 30° (CA)
50° 40°
SECONDARY INJECTION TIME

FIG.12

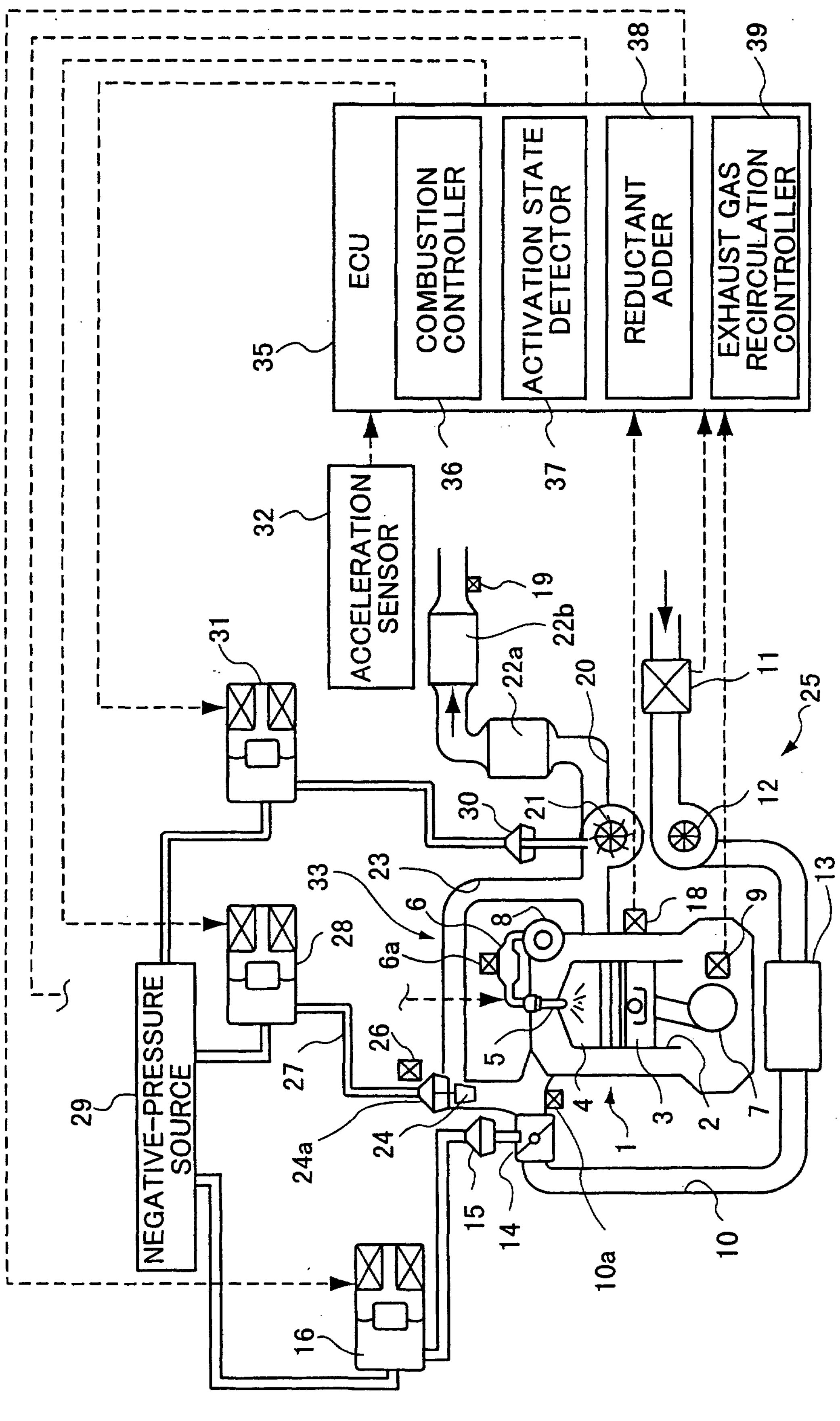
ECU
COMBUSTION CONTROLLER
ACTIVATION STATE DETECTOR
REDUCTANT ADDER
EXHAUST GAS RECIRCULATION CONTROLLER
ACCELERATION SENSOR
NEGATIVE-PRESSURE SOURCE
1
2
3
4
5
6
6a
7
8
9
10
10a
11
12
13
14
15
16
18
19
20
21
22a
22b
23
24
24a
25
26
27
28
29
30
31
32
33
35
36
37
38
39

FIG.13

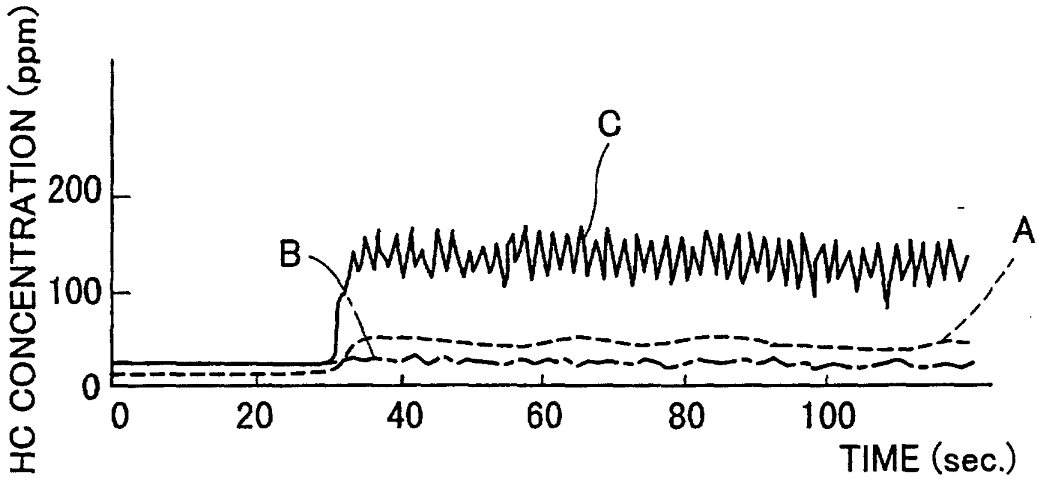
HC CONCENTRATION (ppm)
200
100
0
0
20
40
60
80
100
TIME (sec.)
C
B
A

FIG.14

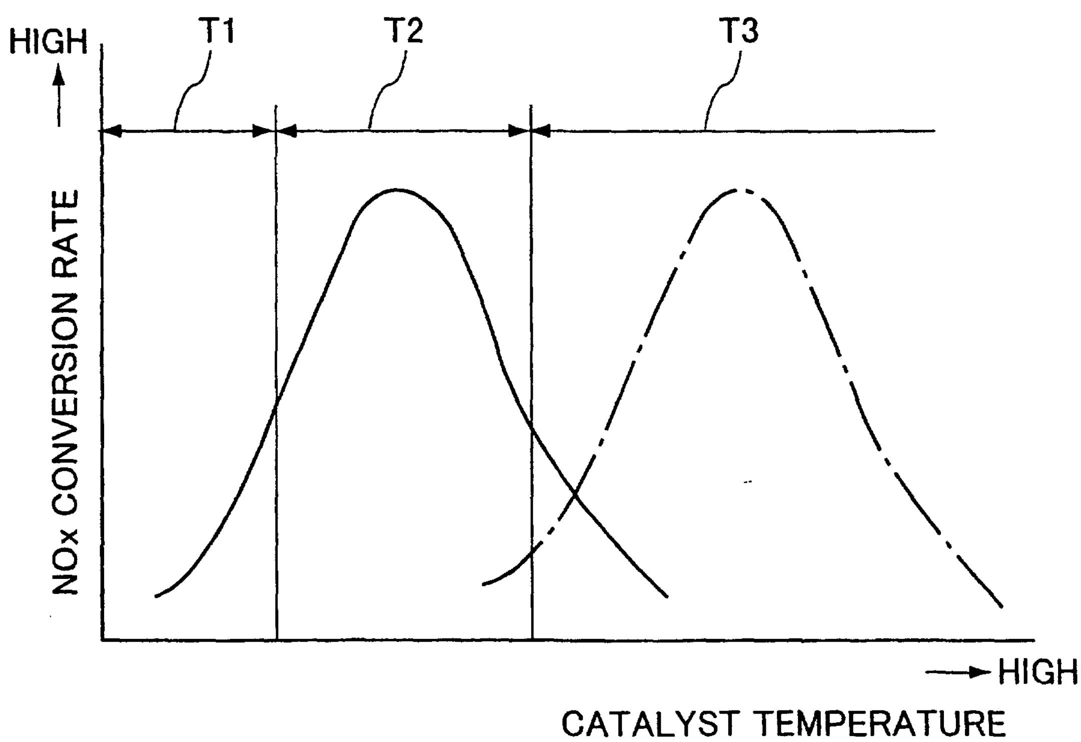
HIGH
NOx CONVERSION RATE
T1
T2
T3
HIGH
CATALYST TEMPERATURE

FIG.15

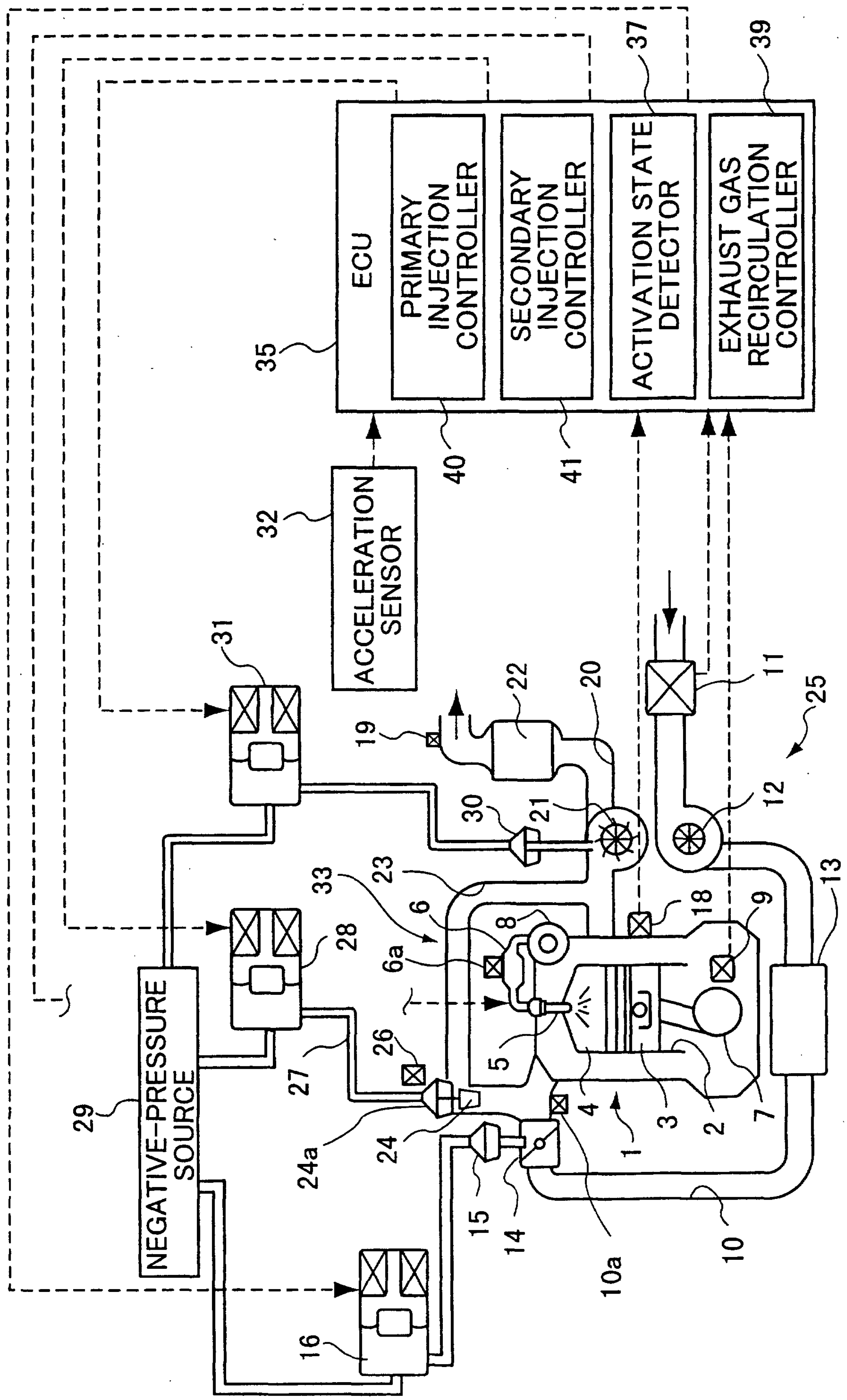

ECU
PRIMARY INJECTION CONTROLLER
SECONDARY INJECTION CONTROLLER
ACTIVATION STATE DETECTOR
EXHAUST GAS RECIRCULATION CONTROLLER
ACCELERATION SENSOR
NEGATIVE-PRESSURE SOURCE
35
37
39
40
41
32
31
28
29
16
22
19
20
21
30
11
25
12
13
18
9
8
6
6a
33
23
26
27
5
4
3
2
7
1
24
24a
15
14
10a
10

FIG.16

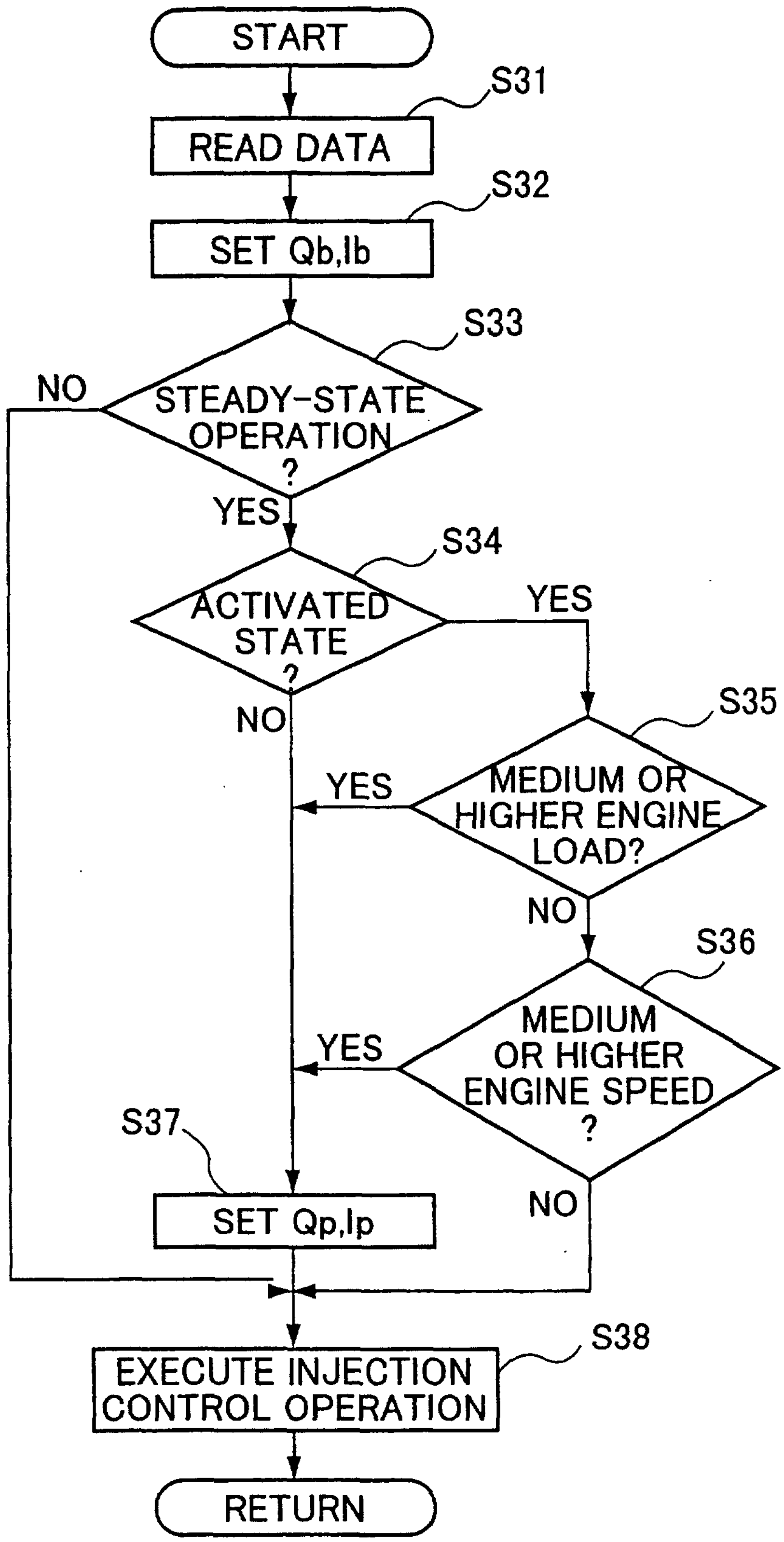
START
S31
READ DATA
S32
SET Qb,Ib
S33
STEADY-STATE OPERATION ?
NO
YES
S34
ACTIVATED STATE ?
YES
NO
S35
MEDIUM OR HIGHER ENGINE LOAD?
YES
NO
S36
MEDIUM OR HIGHER ENGINE SPEED ?
YES
NO
S37
SET Qp,Ip
S38
EXECUTE INJECTION CONTROL OPERATION
RETURN

FIG.17A

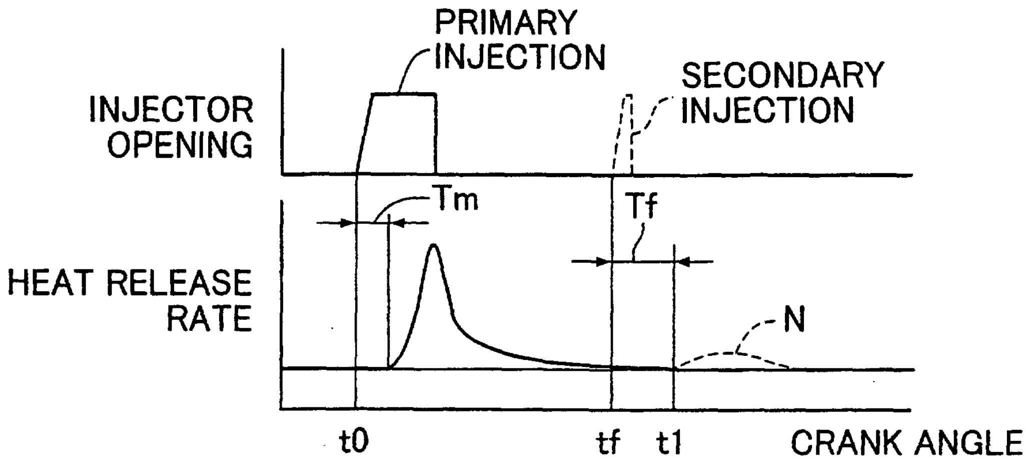


FIG.17B

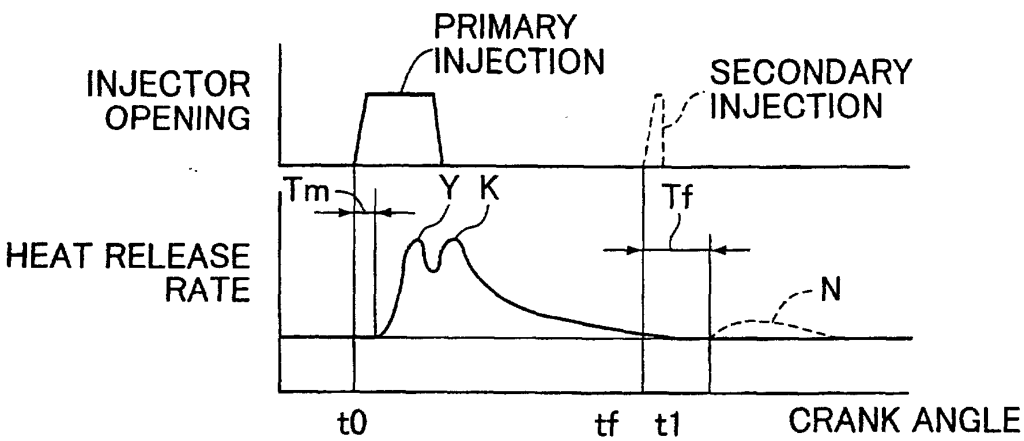


FIG.17C

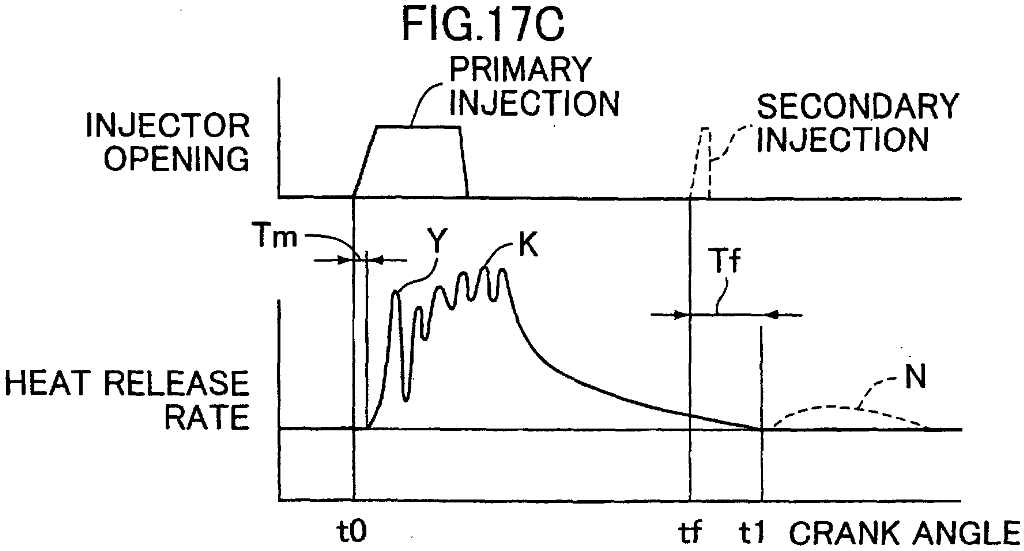

FIG.18A

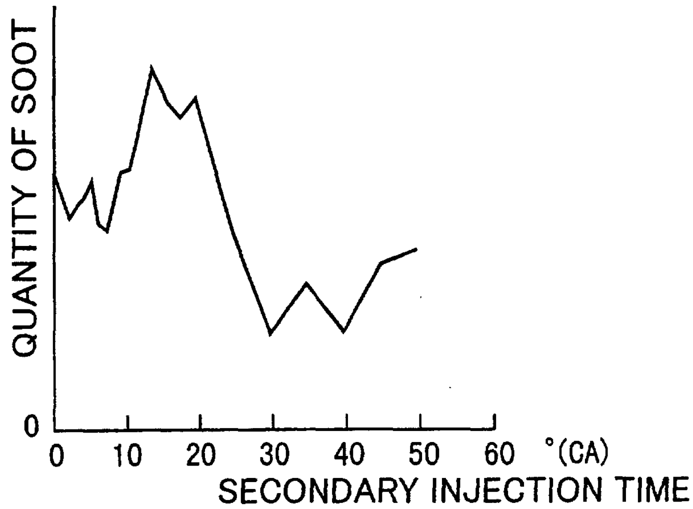


FIG.18B

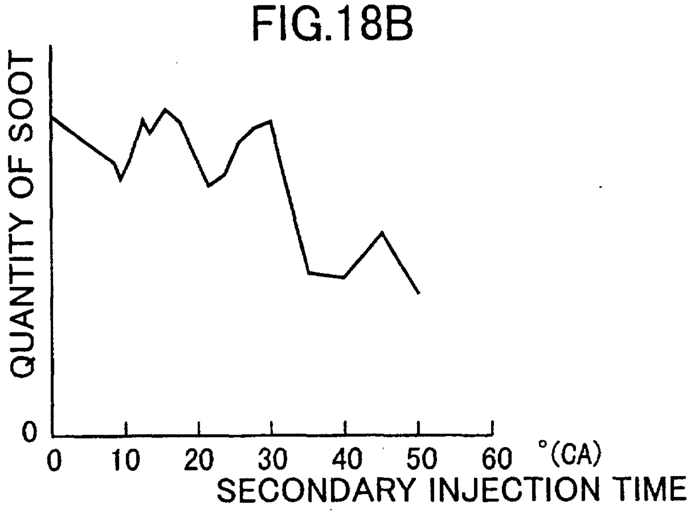


FIG.18C

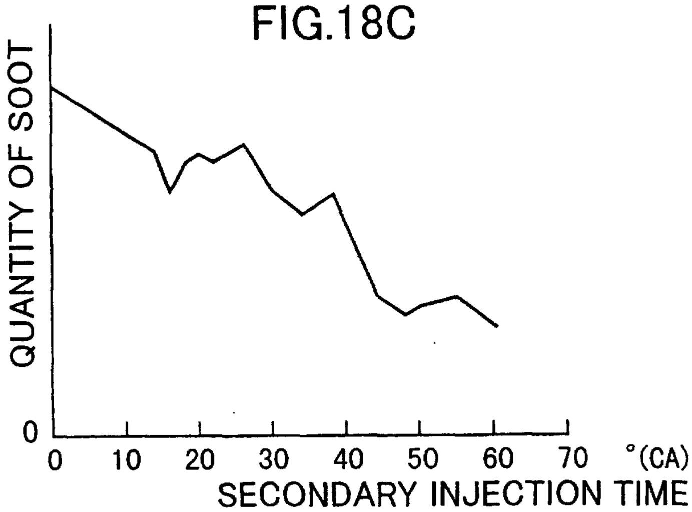

FIG.19A

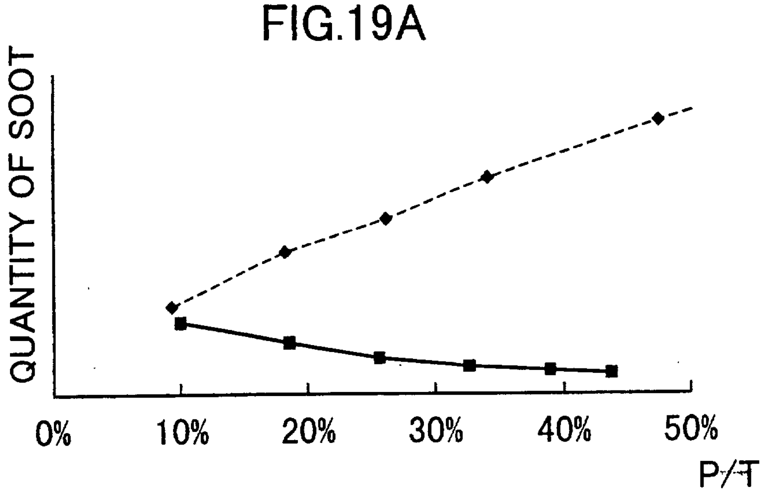


FIG.19B

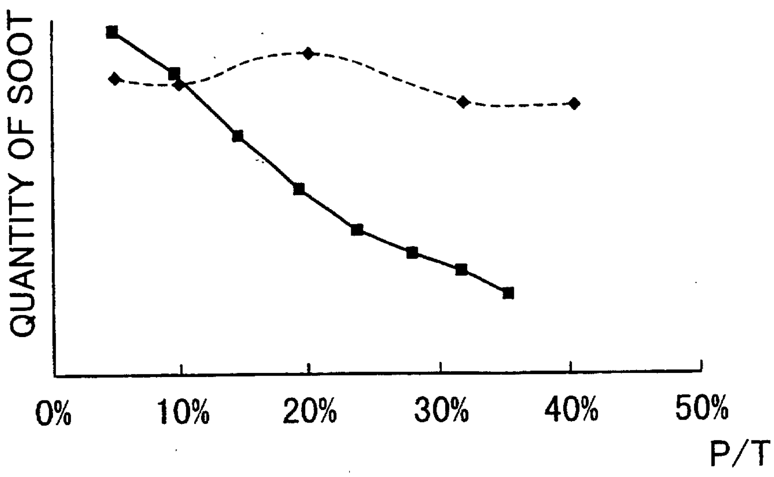


FIG.19C

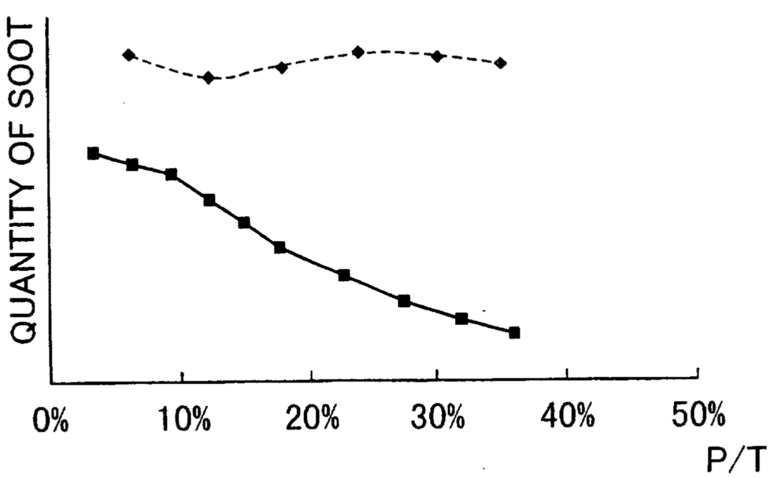

FIG.20A

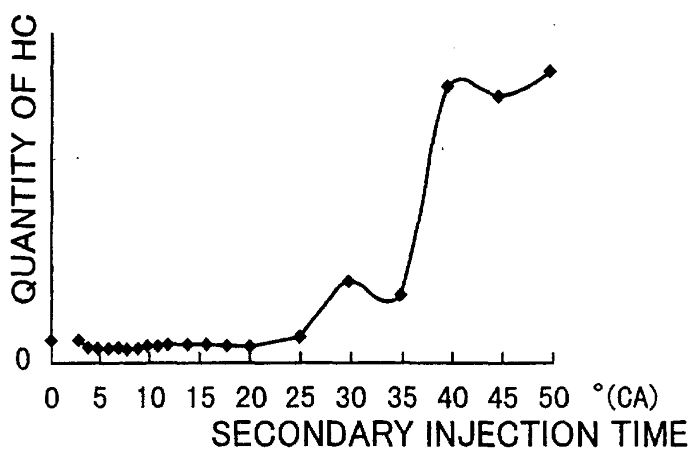


FIG.20B

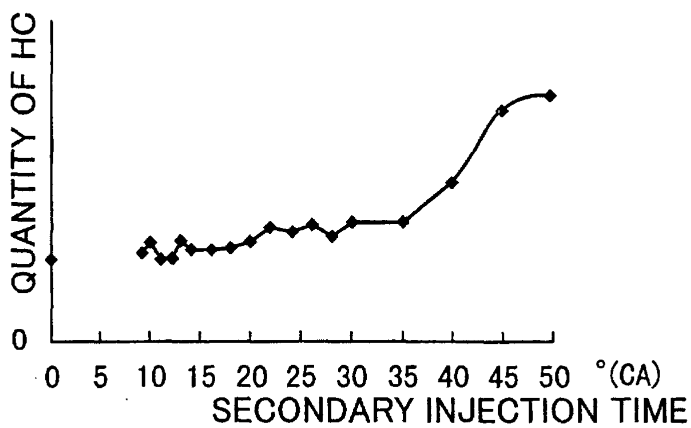


FIG.20C

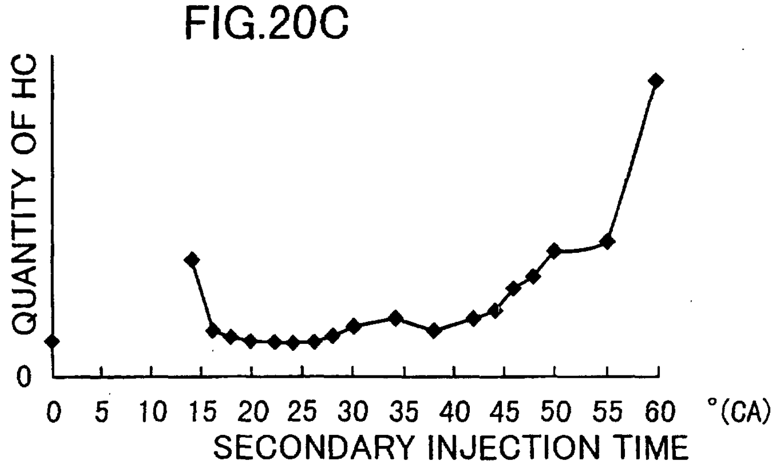

FIG.21A

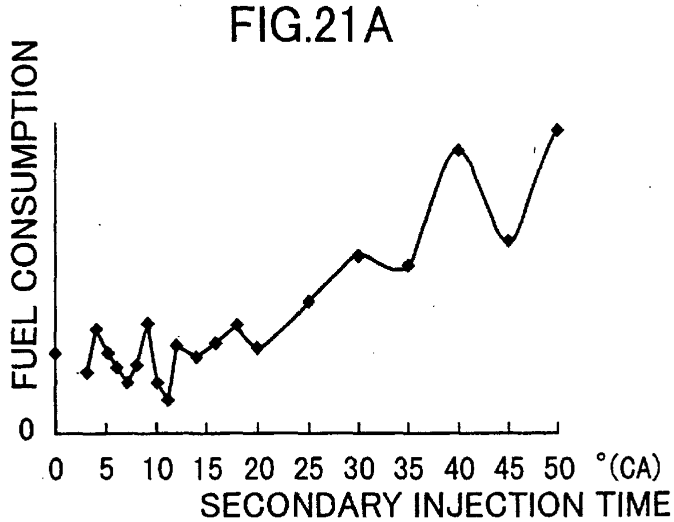


FIG.21B

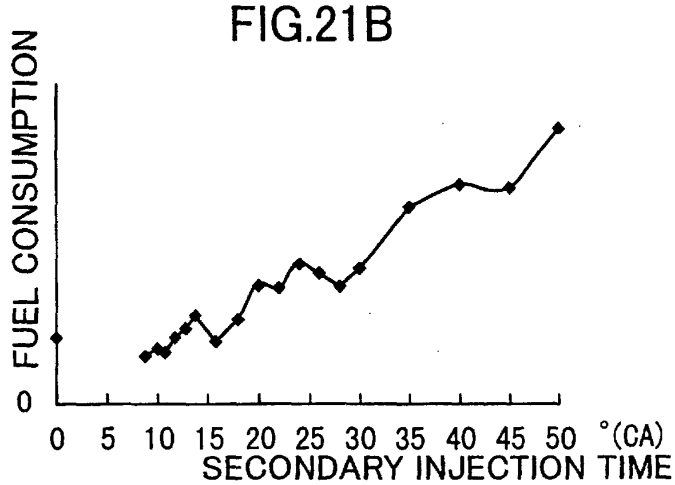


FIG.21C

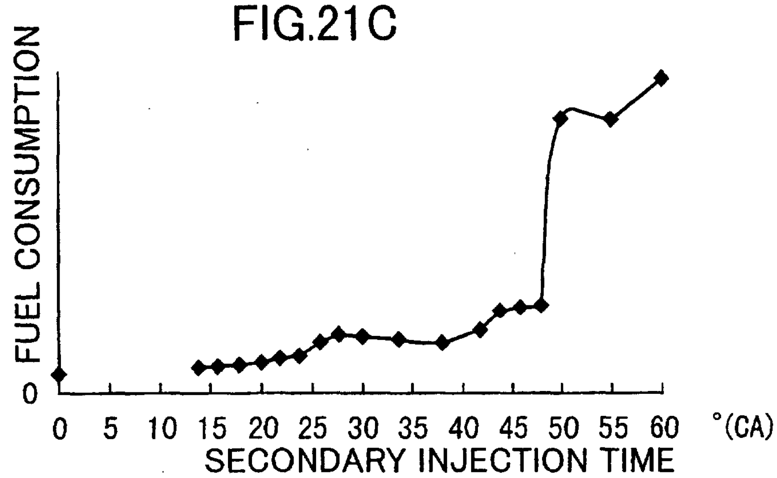

FIG.22A

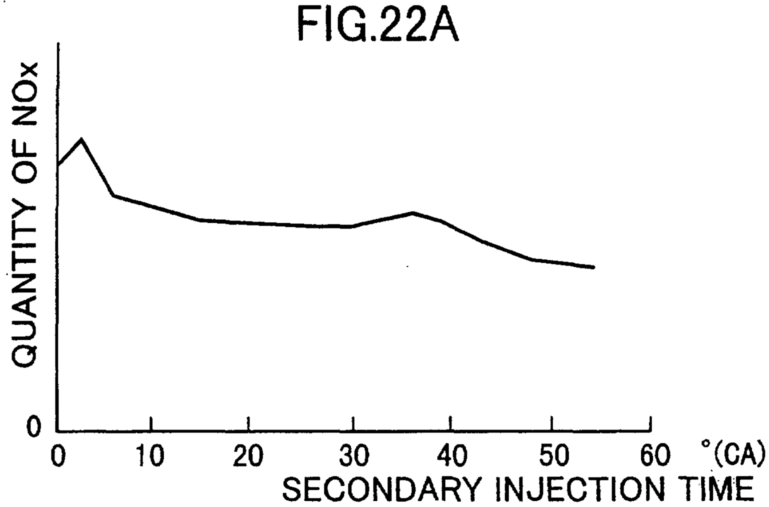


FIG.22B

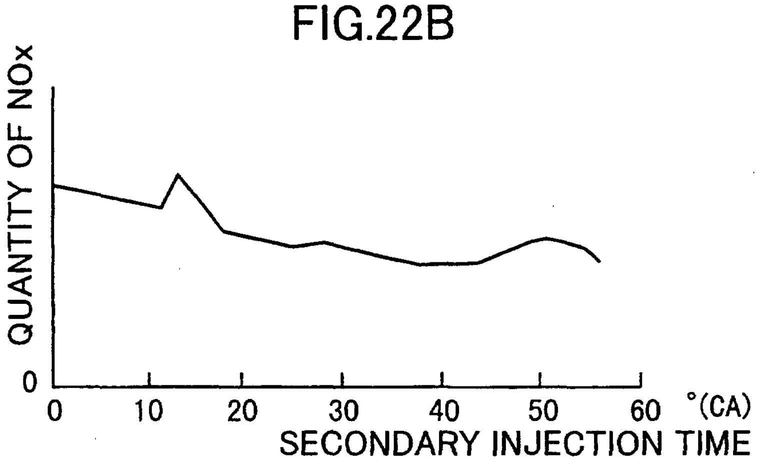


FIG.22C

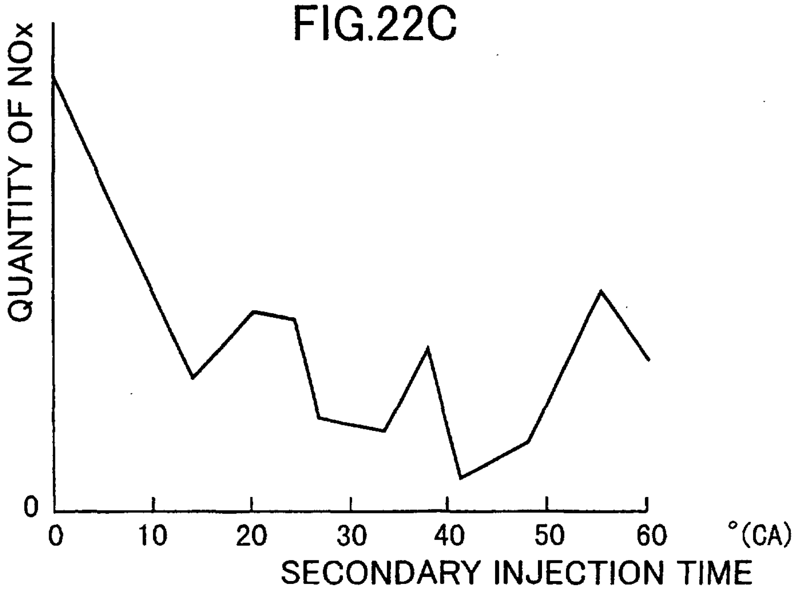

FIG.23A

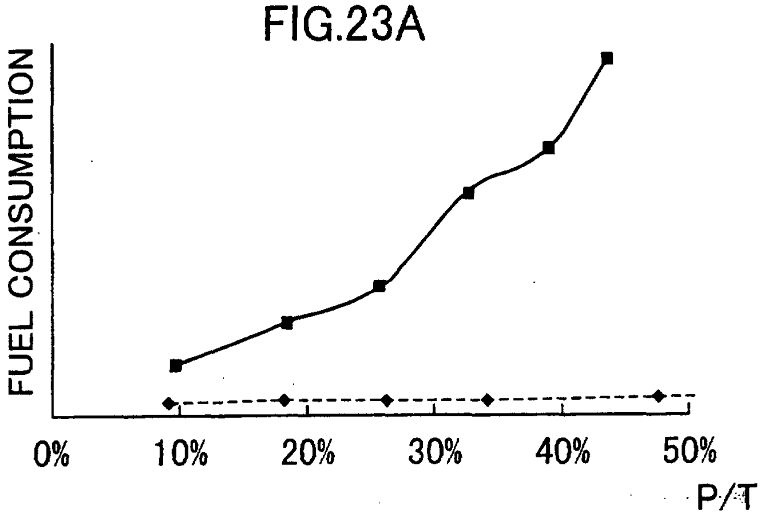


FIG.23B

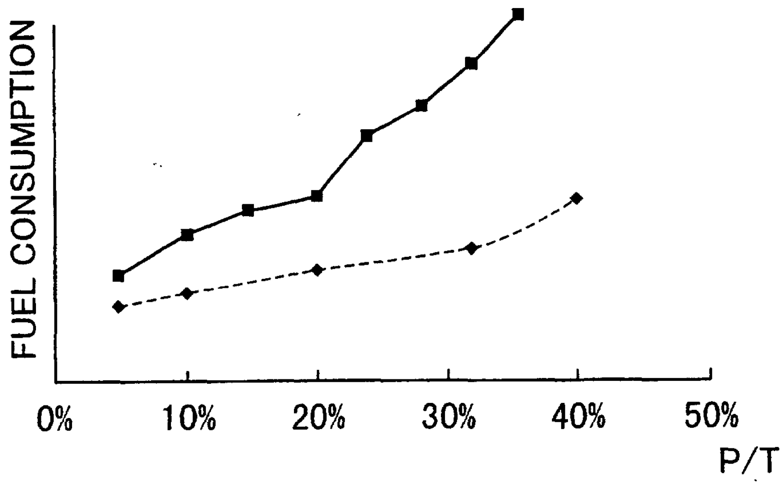


FIG.23C